(19) Europäisches Patentamt
European Patent Office
Office européen des brevets

(11) EP 4 178 153 A1

(12) EUROPEAN PATENT APPLICATION

(43) Date of publication:
**10.05.2023 Bulletin 2023/19**

(21) Application number: **22205715.0**

(22) Date of filing: **07.11.2022**

(51) International Patent Classification (IPC):
***H04L 9/14*** *(2006.01)*

(52) Cooperative Patent Classification (CPC):
**H04L 9/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.11.2021 US 202163277523 P**
**27.10.2022 US 202217975370**

(71) Applicant: **Meta Platforms, Inc.**
**Menlo Park, CA 94025 (US)**

(72) Inventors:
- **Millican, Jonathan Richard**
  **Menlo Park, 94025 (US)**
- **Fein, Jeremy David**
  **Menlo Park, 94025 (US)**
- **Siravara, Shreyas Nagendra**
  **Menlo Park, 94025 (US)**
- **Kasheff, Zardosht**
  **Menlo Park, 94025 (US)**

(74) Representative: **Murgitroyd & Company**
**Murgitroyd House**
**165-169 Scotland Street**
**Glasgow G5 8PL (GB)**

# (54) INDEXED ENCRYPTED MESSAGE BACKUPS

(57) A method for securing data in end-to-end communications is provided. The method includes receiving, in a messaging engine, a message from a participant in a chat group, updating in a database, with a backup tool, a message index with a message information including a participant list, a message content, a chat group identifier, and a metadata, encrypting, with an encryption tool, the message information, storing the message information in a database, and providing to at least one participant in the chat group, a key to access the message information from the database.

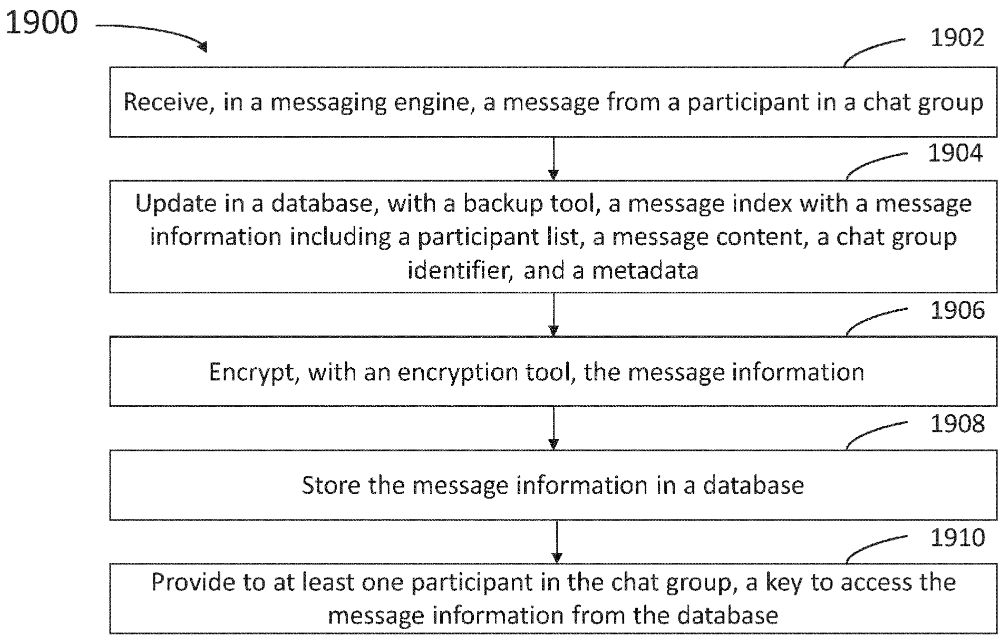


FIG. 19

EP 4 178 153 A1

## Description

TECHNICAL FIELD

The present disclosure is generally directed to a secured backup architecture in messaging networks. More specifically, the present disclosure is directed to end-to-end encryption of messages and message information in chat group applications.

BACKGROUND

In current messaging platforms, data backup is heavily oriented to device-based storage and encryption, wherein the server plays the role of distributing public and private keys. However, such architectures encounter problems when the devices are lost, stolen, or otherwise misused, revoked, or simply replaced by users, and new devices need to be uploaded to the system and given access to the messaging data. Moreover, the client devices, new or old, legitimate or not, may have different storage capacities and security levels. In addition, none of the current messaging platforms adequately addresses the common occurrence of a network administrator becoming rogue and distributing private user data to malicious third parties.

SUMMARY OF THE DISCLOSURE

In a first embodiment, a computer-implemented method includes receiving, in a messaging engine, a message from a participant in a chat group, updating in a database, with a backup tool, a message index with a message information including a participant list, a message content, a chat group identifier, and a metadata, encrypting, with an encryption tool, the message information, storing the message information in a database, and providing to at least one participant in the chat group, a key to access the message information from the database.

In some embodiments, encrypting the message information may comprise encrypting a metadata associated with the message.

In some embodiments, encrypting the message information may comprise encrypting at least a portion of the message index.

In some embodiments, the computer-implemented method may further comprise providing, to a mobile device for the participant in the chat group, an encrypted key to access a message in a thread associated with the chat group.

In some embodiments, the computer-implemented method may further comprise receiving, from a mobile device for a participant in a chat group, a request to access a message encrypted key to access a message in a message thread associated with the chat group.

In some embodiments, providing an access to retrieve the message, or the message information may comprise providing multiple time-dependent encrypted keys.

In some embodiments, providing a key to access the message information may comprise linking two consecutive keys.

In some embodiments, the message information may include a thread information, further comprising accessing one or more messages in a conversation thread based on the thread information.

In some embodiments, the computer-implemented method may further comprise preventing access of a mobile device of the participant of the chat group to the message information before revoking the mobile device when the mobile device is misused.

In some embodiments, the message information may comprise a time-stamp value, further comprising encrypting the time-stamp value and preserving a message order in a chat thread.

In a second embodiment, a system includes one or more processors; and a memory storing instructions which, when executed by the one or more processors, cause the system to perform operations. The operations include to receive, in a messaging engine, a message from a participant in a chat group, to update in a database, with a backup tool, a message index with a message information including a participant list, a message content, a chat group identifier, and a metadata, to encrypt, with an encryption tool, the message information, to store the message information in a database, and to provide to at least one participant in the chat group, a key to access the message information from the database.

In some embodiments, to encrypt the message information the one or more processors may execute instructions to encrypt a metadata associated with the message.

In some embodiments, to encrypt the message information the one or more processors may execute instructions to encrypt at least a portion of the message index.

In some embodiments, the one or more processors may further execute instructions to provide, to a mobile device for the participant in the chat group, an encrypted key to access a message in a thread associated with the chat group.

In some embodiments, the one or more processors may further execute instructions to receive, from a mobile device for a participant in a chat group, a request to access a message encrypted key to access a message in a message thread associated with the chat group.

In a third embodiment, a computer-implemented method includes receiving, in a first mobile device used by a participant in a chat group, an encrypted key from a server hosting the chat group requesting, to the server hosting the chat group, an access to a message information associated with a thread in the chat group, providing, to the server hosting the chat group, the encrypted key upon a prompt by the server to authorize the access to the message information, and storing the message information in a memory of the first mobile device.

In some embodiments, the first encrypted key may be associated with a time window, and requesting the access to the message information comprises requesting the access within the time window.

In some embodiments, the computer-implemented method may further comprise replacing the first encrypted key by a second encrypted key when the first mobile device used by the participant is revoked.

In some embodiments, the computer-implemented method may further comprise requesting a second encrypted key from the server hosting the chat group from a second mobile device used by the participant in the chat group that replaces the first mobile device.

In some embodiments, storing the message information in a memory of the first mobile device may comprise encrypting the message information using a second encrypted key provided by the server hosting the chat group.

In another embodiment, a non-transitory, computer-readable medium stores instructions which, when executed by a processor in a computer, cause the computer to perform a method. The method includes receiving, in a messaging engine, a message from a participant in a chat group, updating in a database, with a backup tool, a message index with a message information including a participant list, a message content, a chat group identifier, and a metadata, encrypting, with an encryption tool, the message information, storing the message information in a database, and providing to at least one participant in the chat group, a key to access the message information from the database.

In yet another embodiment, a system includes a first means to store instructions and a second means to execute the instructions and cause the system to perform a method. The method includes receiving, in a messaging engine, a message from a participant in a chat group, updating in a database, with a backup tool, a message index with a message information including a participant list, a message content, a chat group identifier, and a metadata, encrypting, with an encryption tool, the message information, storing the message information in a database, and providing to at least one participant in the chat group, a key to access the message information from the database.

These and other embodiments will be clear from the following disclosure.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

BRIEF DESCRIPTION OF THE DRAWINGS

FIG. 1 illustrates a network architecture configured for end-to-end encrypted backup in a messaging application, according to some embodiments.

FIG. 2 is a block diagram illustrating details of devices and systems used in the network architecture of FIG. 1, according to some embodiments.

FIG. 3 illustrates a privacy hierarchy of messages in an encrypted messaging application, according to some embodiments.

FIG. 4 illustrates a database architecture wherein data is stored in raw form, according to some embodiments.

FIG. 5 illustrates a database architecture wherein data is encrypted using a key stored in a client device, according to some embodiments.

FIG. 6 illustrates a database architecture wherein data is encrypted using a key rotation scheme, according to some embodiments.

FIG. 7 illustrates a database architecture including epoch lists including proof-of-membership to an encrypted messaging application, according to some embodiments.

FIG. 8 illustrates a database architecture including authenticated epoch listings in an encrypted messaging application, according to some embodiments.

FIG. 9 illustrates a database architecture including chained epoch keys in an encrypted messaging application, according to some embodiments.

FIG. 10 illustrates a database architecture including a reverse linked-list of epoch keys in an encrypted messaging application, according to some embodiments.

FIG. 11 illustrates a database architecture configured to hide identifiers in the backup for an encrypted messaging application, according to some embodiments.

FIG. 12 illustrates a database architecture configured to hide timestamps in the backup for an encrypted messaging application, according to some embodiments.

FIG. 13 illustrates a database architecture in which storing is unlinked from a user's account for an encrypted messaging application, according to some embodiments.

FIGS. 14A-14B illustrate a database architecture configured to hide epoch identifiers in an encrypted messaging application, according to some embodiments.

FIG. 15 illustrates a database architecture configured to prevent inter-thread comparisons in an encrypted messaging application, according to some embodiments.

FIGS. 16A-16D illustrate database architectures configured to protect messaging pairs in an encrypted messaging application from network administrators and other actors, according to some embodiments.

FIG. 17 illustrates a timeline of backup events for device revocation in an encrypted messaging application before a server becomes malicious, according to some embodiments.

FIG. 18 illustrates a timeline of backup events for device revocation in an encrypted messaging application after a server becomes malicious, according to some embodiments.

FIG. 19 is a flowchart illustrating steps in a method for end-to-end backup encryption in a messaging application, according to some embodiments.

FIG. 20 is a flowchart illustrating steps in a method for backup and data recovery in a message application upon device revocation, according to some embodiments.

FIG. 21 is a block diagram illustrating an exemplary computer system with which headsets and other client devices in the network architecture of FIG. 1 and the methods of FIGS. 19 and 20 can be implemented, according to some embodiments.

In the figures, elements having the same or similar reference numeral are associated with the same or similar attributes and features, unless explicitly stated otherwise.

DETAILED DESCRIPTION

In the following detailed description, numerous specific details are set forth to provide a full understanding of the present disclosure. It will be apparent, however, to one ordinarily skilled in the art, that embodiments of the present disclosure may be practiced without some of these specific details. In other instances, well-known structures and techniques have not been shown in detail so as not to obscure the disclosure.

## General Overview

In an end-to-end encrypted messaging platform, messaging is ultimately device-based rather than cloud-based. This requires a ground-up re-designing the architecture of the messaging platform, which introduces a wide range of challenges to solve.

Encrypted messaging platforms face several challenges. New devices can no longer trivially access an account's message history from the cloud. Also, a device-based architecture relies on devices managing their own message storage, yet many devices are storage-constrained. Furthermore, messages are not indexed/searchable in encrypted backups. According to some aspects, a client having a relevant key can read the data.

In an implementation, the server can access the data in an indexed manner (e.g., only load messages in a certain thread, or in a certain time range, and the like). Additionally, the described approach permits for structured/indexed encrypted data. In an embodiment, all data is stored anonymously, and/or encrypted.

In some embodiments, it is desirable to cryptographically protect data from network administrators and other actors that are not logged in to a participant account, but may have access to the database. Further, some embodiments prevent untrusted actors to collude with network administrators to try to gain access to that account. For example, in some cases an entire server may become corrupted. In some embodiments, a client device is removed or replaced from the account. Accordingly, some embodiments may deem the old client device as untrusted.

In some embodiments, it is desirable that the encryption be reversible. In yet other embodiments, it is desirable that the encryption be not remappable by an earlier client device (*e.g.,* a device that has been replaced, stolen, lost, or otherwise revoked).

Some embodiments split a backup process into a user space including the user account and stores backup metadata, and an anonymous space. Thus, any identifier visible within the user space is hidden from the anonymous space, and vice versa. Accordingly, anonymity is maintained throughout the network. In some embodiments, a participant account (e.g., message inbox) may be hidden so that an inbox database becomes part of the anonymous space while a backup management database is part of the user space.

Some embodiments enable consistent outputs between devices, and support revocation of a client device ability to compute any outputs by hiding the inputs from the server. In some embodiments, a system prevents unauthorized client devices from computing outputs by hiding application outputs from unauthorized devices. Additionally, some embodiments prevent caching input/output pairs, and running point queries later.

## Example System Architecture

FIG. 1 illustrates a network architecture 100 configured for end-to-end encrypted backup in a messaging application, according to some embodiments. Servers 130 and a database 152 are communicatively coupled with client devices 110 via a network 150. Servers 130 may host chat group applications running in client devices 110. Client devices 110 may be used by participants in the chat group conversations. Client devices 110 may include smart phones, laptops, mobile devices, palm devices, and even desktops. In some embodiments, client devices 110 may include virtual reality or augmented reality (VR/AR) headsets and/or smart glasses, and the chat group conversation may include immersive reality elements. Network 150 can include, for example, any one or more of a local area network (LAN), a wide area network (WAN), the Internet, and the like. Further, network 150 can include, but is not limited to, any one or more of the following network topologies, including a bus network, a star network, a ring network, a mesh network, a star-bus network, tree or hierarchical network, and the like. Database 152 may store backup files from the chat group conversations, including threads, messages, and metadata. In addition, database 152 may include encrypted keys that may be distributed to each and all of the chat group participants.

FIG. 2 is a block diagram 200 illustrating details of devices and systems used in network architecture 100, according to some embodiments. Client device 110 includes a processor 212-1, memory 220-1, and communications module 218-1. Likewise, server 130 may include a processor 212-2, a memory 220-2, and a communications module 218-2. Memories 220-1 and 220-2 (hereinafter, collectively referred to as "memories 220") may store instructions which, when executed by processors 212-1 and 212-2 (hereinafter, collectively referred to as "processors 212"), cause client devices 110 and servers 130 to perform, at least partially, one or more steps in methods described herein. Communications modules 218-1 and 218-2 (hereinafter, collectively referred to as "communications modules 218") may include hardware and software configured according to networking protocols, including Ethernet cards, telephone lines, radio and wireless antennas and associated digital and/or analog circuitry, such as Bluetooth, Wi-Fi, near field contact (NFC) and other radio-frequency (RF) communication schemes, including ultrasound. Communications modules 218 enable client device 110 and server 130 to transmit packets 225 and 227 via network 150.

Client device 110 may be coupled to an input device 214 and an output device 216. Input device 214 may include a mouse, a pointer, a touch-screen display, a joystick, a wireless joystick (*e.g.,* coupled to a VR/AR headset), a microphone, a camera, and the like. Output device 216 may include a display (*e.g.,* in a visor for a VR/AR headset), a touch-screen display, a speaker, a light, and the like. In some embodiments, input device 214 and output device 216 may also include sensors and actuators (e.g., haptic sensors and actuators), contact microphones, such as inertial motion sensors (IMUs), including accelerometers, gyroscopes, and the like.

Memory 220-1 in client device 110 may include an application 222. Application 222 may include a group chat application downloaded from and hosted by a messaging engine 232 in memory 220-2 of server 130. Through application 222, server 130 may provide messaging and backup services to a chat group participant handling client device 110. Accordingly, client device 110 may provide a packet 225 including data such as messages and other metadata provided by a participant in the chat group. In return, messaging engine 232 may provide a packet 227 to each of devices 110. Packet 227 may include, for example, multiple messages in a chat thread, to one or more, or all participants in the chat. In some embodiments, packets 225 may include public and/or private encryption keys exchanged between client device 110 and server 130 for backup of data in chat group application 222.

Memory 220-2 includes messaging engine 232, thread engine 234, and device management engine 236. Messaging engine 232 hosts chat application 222 and performs synchronization operations, media sharing operations, indexing operations, encryption operations, and the like. Thread engine 234 handles message threads in multiple group chats, including metadata associated with participant lists, timestamps, and the like. In addition, memory 220-2 may include tools that enable engines 232, 234, and 236 to perform their tasks. The tools may include an encryption tool 240, an indexing tool 242, a backup tool 244, an epoch rotation tool 246, and a revocation tool 248.

A database 252 may store messaging information (*e.g.*, message contents, message metadata, thread information and metadata, encryption keys, and the like) generated and provided by any one of engines 232, 234, and 236, or tools 240, 242, 244, 246, and 248.

FIG. 3 illustrates a hierarchy 300 of messages and data in an encrypted messaging application (*e.g.*, for a chat group), according to some embodiments. A privacy level 301 determines hierarchy 300. For example, recoverable messages 310-1 may have lower privacy level 301 than messages that are secured from a provider 310-2, from old devices 310-3, from a social network 310-4, or metadata secured from old devices 310-5 (hereinafter, collectively referred to as "message information 310").

FIG. 4 illustrates a relational database architecture 400 wherein data is stored in raw form, according to some embodiments. In the database, a threads table 434 may include indexing status 442, backup identifiers 444, and thread identifiers 430. A messages table 432 may list index status 442 and backup identifiers 444, thread identifiers 430 and message identifiers 431, timestamps 450 and message data 433 (*e.g.,* content) for backed up messages.

In an end-to-end encrypted system as disclosed herein, it is desirable that only limited and selected entities be able to see unencrypted messaging data. Accordingly, further steps may be taken to achieve a higher privacy level, as disclosed below.

FIG. 5 illustrates a database architecture 500 wherein data is encrypted using a key stored in a client device, according to some embodiments. Accordingly, a thread table 534 and a messages table 532 may include indexing fields 542, backup identifiers 544, and thread identifiers 530. Messages table 532 may include timestamps 550, stored as raw data (*e.g.*, without encryption), and message identifiers 531. Database architecture 500 includes message data 533 in encrypted form.

In some embodiments, an encryption key to store data 533 may be available to a client device used by any participant in the chat group, per request to a server hosting the chat group application (*e.g.*, client device 110 and server 130).

In some embodiments, the encryption key may be static. This may lower privacy robustness, especially when a client device is removed from a participant account in the server (*e.g.,* via revocation for improper use, a lost or stolen client device, or simply the participant decides to upgrade their client device).

FIG. 6 illustrates a database architecture 600 wherein data is encrypted using a key rotation scheme, according to some embodiments. To enhance privacy levels in view of, *e.g.,* revoked devices, key rotation through "epochs" or time-windows may be utilized. For each epoch, a different encryption key 640-3 is used, thus enhancing data security. Epoch rotation as illustrated in database architecture 600 may occur at any time. In some embodiments, epoch rotation may be implemented when a device is removed from the account (*e.g.*, revoked or retired, stolen, lost, and the like). This provides the ability to remove revoked client devices from backup in database architecture 600 and ensure that these are unable to read any new messages.

A device table 636 lists indexing data 642, backup identifiers 644, and device public keys 640-1. Device public keys 640 may be fixed to the client device, unless and until revocation. An epoch table 646 lists indexing data 642, backup identifiers 644, and epoch identifiers 647. An epochs key table 648 lists indexing data 642, device identifiers 637, epoch identifiers 647, backup identifiers 644 and epochs key data 640-3.

FIG. 7 illustrates a database architecture 700 including epoch table 746 in an encrypted messaging application, according to some embodiments. Epoch table 746 includes indexing status 642, backup identifiers 644 (*cf.* above), and proof-of-membership 747. Device table 636 and epoch table 746 include index status 642, backup identifiers 644, and epoch identifiers 647 (*cf.* above). This precludes a rogue network administrator to allow an imposter client device to access a device table 636.

The device public keys 640-1 are authenticated in the backup via proofs-of-membership 747. This may include anyone who holds a current epoch key 640-3 (and thus has legitimate access to the backup). This means that each membership proof 747 can just be a hash-based message authentication code (HMAC) over device public key 640-1 and epoch key 640-3.

According to some embodiments, instead of trying to add a client device to device table 636, a participant may try to rotate epoch table 746, because device public keys 640-1 are known. Epochs key table 648 lists indexing data 642, device identifiers 637, epoch identifiers 647, backup identifiers 644 and epochs key data 640-3.

FIG. 8 illustrates a database architecture 800 including an authenticated epoch table 746 in an encrypted messaging application, according to some embodiments. Device table 636 and epoch table 746 include index status 642, device identifiers 637, backup identifiers 644, and epoch identifiers 647 (*cf.* above). Accordingly, new epoch data may be authenticated by a client device that is a member of a previous epoch, for which an encrypted key 640-3 is accessible. Membership proofs 747 validate access to the new epoch data. In an implementation, epoch keys table 848 includes an encrypt and authenticate operation 840 using device public key 640-1 for the client device. Accordingly, a network administrator may no longer have a mechanism to insert itself and read data from the backup of database architecture 800.

FIG. 9 illustrates a database architecture 900 including chained epoch keys table 948 in an encrypted messaging application, according to some embodiments. Device table 636 and epoch table 746 include index status 642, backup identifiers 644, device public key 640-1, and epoch identifiers 647 (*cf.* above). Epoch keys table 948 includes indexing field 642, backup identifiers 644, device identifiers 637, epoch identifiers 647, and epoch keys 640-3 (*cf* above). According to aspects, the previous epoch key 640-3 is combined with a new epoch entropy to obtain a new epoch key 940-3, as:

$$\text{new_epoch_key} = \text{key_derivation_function}\,(\text{new_epoch_entropy}, \text{old_epoch_key}) \quad (1)$$

As a result, message content is protected during backup of database architecture 800, and Eq. (1) ensures that new epoch keys 940-3 are not available to imposters or revoked devices. Additionally, any client device that is added to the backup may receive an arbitrarily long list of keys in the enrollment process (*e.g.,* in the epoch entropy).

FIG. 10 illustrates a database architecture 1000 including a reverse-linked table 1048 of epoch keys 640-3 in an encrypted messaging application, according to some embodiments. Device table 636 and epoch table 746 include index status 642, device public keys 640-1, backup identifiers 644, epoch identifiers 647, and membership proofs 747 (*cf.* above). Reverse-linked list 1048 includes device identifiers 637 and epoch identifiers 647. A reverse-linked key 1040 is formed from previous epoch keys 640-3. When a client device is added to a backup in database architecture 1000, reverse-linked key 1040 guarantees that learning epoch key (for the nth epoch) may provide the encryption key for the previous epoch (n-1). In some embodiments, this is achieved by encrypting earlier epoch keys with the latest epoch key. This procedure ensures availability when a client device is added.

FIG. 11 illustrates a database architecture 1100 configured to hide identifiers in a backup for an encrypted messaging application, according to some embodiments. A threads table 1134 includes indexing status 442, backup identifiers 444 (*cf.* above) and thread identifiers 1130. A messages table 1132 includes indexing status 442, backup identifiers 444, thread identifiers 1130, message identifiers 1131, timestamps 450, epoch identifiers 647 (*cf.* above), and an encrypted message data 1133.

Thread identifiers 1130 and message identifiers 1131, when not encrypted, may be cross-referenceable and thus offer a potential risk. Accordingly, in some embodiments, a hash function (*e.g.,* HMAC) on identifiers 1130 and 1131 provides consistent mapping and obscures the data (*e.g.,* from network administrators). HMAC functions may include a master key re-computable by revoked devices.

In some embodiments, a device list, an epoch table, and epoch keys table (not shown) are kept in a user space. Threads table 1134 and message table 1132 may stay in the anonymous space on account of the hash and the encryption. Accordingly, in some embodiments, backup identifiers 444 and epoch identifiers 647 may be visible in both user and anonymous space.

In some embodiments, backup identifiers 444 may be hidden from public read through an Oblivious Consistent Mapping Function (OCMF) in the anonymous space. Computation of an OCMF may include having a client device and server both run a computation involving device-specific secrets. With proper initialization, two client devices sharing a backup identifier 444 will produce the same output. Additionally, the server's device-specific secret can be unilaterally deleted when a client device is revoked. Thus, the revoked device is incapable of running the OCMF, even if it later colludes with network administrators.

Epoch identifiers 647 are not used for lookup or indexing and are not globally unique. In some embodiments, epoch identifiers 647 may be unique within a backup. In these cases, to hide epoch identifiers 647, each epoch is allocated a value that is only visible in the anonymous space. In some embodiments, the value for epoch identifiers may simply include incrementing integers starting from 0, to ensure that they are not unique. This provides reasonable anonymity against rogue network administrators.

FIG. 12 illustrates a database architecture 1200 configured to hide timestamps 1250 in the backup for an encrypted messaging application, according to some embodiments. For example, timestamps 1250 may be server-assigned, and so may be exposed to a rogue network administrator and may be cross-referenceable. Before hiding timestamps 1250, the system may sort them (to preserve the chronological order). Accordingly, some embodiments include an order-preserving encryption.

A threads table 1134 includes indexing status 442, backup identifiers 444, and thread identifiers 1130 (*cf.* above). A messages table 1232 includes indexing status 442, backup identifiers 444, thread identifiers 1130, message identifiers 1131, epoch identifiers 647, an encrypted message data 1133 (*cf.* above), and hidden timestamps 1250.

Although threads may not be cross-comparable in time, they may still be ordered individually. Also, some embodiments may use the same key for encrypting messages across all threads. To avoid revealing timestamp comparisons between messages across threads, a special order preserving encryption (OPE) function may be defined as:

$$\text{thread_list_ope_key} = \text{derive_ope_key}(\text{root_ope_key}, \text{"thread list"}) \qquad (2)$$

And

$$\text{ope_key}(\text{thread_id}) = \text{derive_ope_key}(\text{root_ope_key}, \text{thread_id}) \qquad (3)$$

Eqs. (2) and (3) ensure that different threads are associated with hidden timestamps 1250 that are not comparable.

FIG. 13 illustrates a database architecture 1300 in which storing is unlinked from a user's account for an encrypted messaging application, according to some embodiments. Database architecture 1300 hides the mailbox structure in a user's account (*e.g.,* a participant in the chat group) to prevent any data leaks. A threads table 1334 includes indexing status 442, thread identifiers 1130 (*cf.* above), and backup identifiers 1344. A messages table 1332 includes indexing status 442, thread identifiers 1130, message identifiers 1131, epoch identifiers 647, an encrypted message data 1333, hidden timestamps 1250 (*cf.* above), and backup identifiers 1344. Backup identifiers 1344 are hidden using a hash function (*e.g.*, HMAC), hiding user account references. Accordingly, unlinking the user inbox from backup identifiers 1344 makes any inferences on message data 1333, harder. In some embodiments, authentication for user accounts in database architecture 1300 may include backup-specific bearer tokens to proceed.

FIGS. 14A-14B illustrate database architecture 1400 configured to hide epoch identifiers 1447 in an encrypted messaging application, according to some embodiments. Device table 636 includes indexing status 642, backup identifiers 644, device identifiers 637, and device public key 640-1. Epoch table 1446 includes indexing status 642, backup identifiers 644, epoch identifiers 647, proof-of-membership 747 (*cf.* above), and encrypted epoch metadata 1447A. An epochs key table 648 lists indexing data 642, epoch identifiers 647, backup identifiers 644, device identifiers 637, and epochs key data 640-3 (*cf.* above).

A threads table 1434 includes indexing status 442, thread identifiers 1130, and backup identifiers 1344 (*cf.* above). In some embodiments, database architecture 1400 is configured to prevent inter-thread comparisons. Accordingly, there is no need to compare timestamps between messages (only need to sort recent threads - have own timestamp) using per-thread OPE keys (*cf.* Eqs. 2-3).

In some embodiments, epoch identifiers 647 may also be globally unique. To further address potential data leaks or inferences from epoch identifiers 647, a messages table 1432 includes indexing status 442, thread identifiers 1130, message identifiers 1131, encrypted message data 1333, hidden timestamps 1250, backup identifiers 1344 (*cf.* above), and epoch identifiers 1447. In some embodiments, epoch identifiers 1447 include an integer-incrementing "Epoch Anon ID," to anonymize this value (e.g., remove uniqueness).

FIG. 15 illustrates a database architecture 1500 configured to hide identifiers from old devices in an encrypted messaging application, according to some embodiments. A threads table 1534 includes indexing status 642 (*cf.* above), thread identifiers 1530, and backup identifiers 1544. A messages table 1532 includes indexing status 642, backup identifiers 1544, thread identifiers 1530, message identifiers 1531, anonymous epoch identifiers 1447, hidden timestamps 1250, and encrypted message data 1333 (*cf.* above). Backup identifiers 1544, thread identifiers 1530, and message identifiers 1531 are hidden using a hiding function as disclosed herein (*e.g.,* OCMF) including a per-device server-side component for unilaterally delete on revoke, in case a client device is retired, stolen, lost, or otherwise misused.

FIGS. 16A-16D illustrate database architectures 1600A, 1600B, 1600C, and 1600D (hereinafter, collectively referred to as "database architectures 1600") configured to protect messaging pairs from network administrators and other actors in an encrypted messaging application, according to some embodiments.

Database architecture 1600A includes threads table 1634 with indexing status 442, thread identifiers 1130, and backup identifiers 444 (*cf.* above). Database architecture 1600A also includes a messages table 1632A with indexing status 442, backup identifiers 444, thread identifiers 1130, message identifiers 431, timestamps 450, epoch identifiers 647 (*cf.* above), and encrypted message data 1633. Thread identifiers 1130 may be hashed with a hiding function (*e.g.*, HMAC) to hide message recipients. In some embodiments, database architecture 1600A may exclude thread information (*e.g.*, "messaging pairs," meaning the pairs of senders/receivers). In some embodiments, messaging pairs may be desirably protected from network administrators. According to aspects, an index 442 may include a mutation of the ID that produces a consistent value. HMAC functions are effective hash functions that network administrators are incapable of computing. Calculations may produce consistent values within an epoch - and also across epochs - so that all messages for a thread may be queried without knowing the epochs that contain them. According to aspects, a key may be utilized that does not rotate even when the epoch does (thread_id_key). As a result, index 442 may address messages in a particular thread, and network administrators have no way of knowing what the thread is.

Database architecture 1600B includes threads table 1634 with indexing status 442, thread identifiers 1530, and backup identifiers 444 (*cf* above). Database architecture 1600B also includes a messages table 1632B to prevent a revoked client device from colluding with a rogue network administrator to test whether a given thread exists in a user's mailbox. Accordingly, messages table 1632B includes indexing status 442, backup identifiers 444, thread identifiers 1530, message identifiers 431, timestamps 450, epoch identifiers 647 (*cf.* above), and encrypted message data 1633. Thread identifier 1530 uses a hash function (*e.g.,* OCMF) that is not computable by unauthorized parties. Accordingly, unauthorized parties are prevented from working with network administrators to test whether given threads exist.

Database architecture 1600C includes messages table 1632C to hide message identifiers 1531, which may still match between different participant backups. Messages table 1632C includes indexing status 442, backup identifiers 444, thread identifiers 1530, message identifiers 1531, timestamps 450, epoch identifiers 647, and encrypted message data 1633 (*cf* above). In some embodiments, message identifiers 1531 are obtained via OCMF functions. Accordingly, database architecture 1600C prevents a revoked device to map a given message identifier 1531. As a result, messaging pairs are mostly protected.

Database architecture 1600D includes a messages table 1632D with indexing status 442, backup identifiers 444, thread identifiers 1530, message identifiers 1531, epoch identifiers 647, encrypted message data 1633 (*cf.* above), and encrypted timestamps 1650. In some embodiments, timestamps 1650 may be encrypted using OPE functions to break any precise comparisons between threads. Accordingly, values may be comparable between different epochs (to reliably sort the values within the backup store). Accordingly, an OPE key for encrypting timestamps 1650 may be long-lived within a backup and a revoked device may retain the ability to compute new OPE outputs.

For practical reasons, some database architectures 1600 maintain the ability to query ranges of threads and messages so this requires that the mailbox is still structured in storage. In some embodiments, database architectures 1600 may be stored anonymously to ensure that third-party requests do not reveal the identity of the user (*e.g.*, through network administrator access tokens, and the like), and minimize visibility of the mailbox structure.

FIG. 17 illustrates a timeline 1701 of backup events 1700 for device revocation in an encrypted messaging application before a server becomes rogue, according to some embodiments. Before device revocation, at S1702, the client device knows everything that happened. At S1704, the client device is revoked and the legitimate server deletes its encrypted key so that the client device's encrypted key becomes useless. At S1706, the backup metadata is still protected from the revoked device (*e.g.*, by an OCMF). If at S1708 the server becomes rogue, there is little it can do to access the protected backup.

FIG. 18 illustrates a timeline 1801 of backup events 1800 for device revocation in an encrypted messaging application after a server becomes rogue, according to some embodiments. Before device revocation, at S1802, the client device knows everything that happened. At S1804, the server becomes rogue and starts attempting to learn client device metadata. At S1806, the client device is revoked but the rogue server still attempts to read client device metadata, likely in collusion with the revoked client device. At S1808, the rogue server is prevented from accessing any metadata from the revoked client device, thus mitigating the data loss.

FIG. 19 is a flowchart illustrating steps in a method 1900 for end-to-end backup encryption in a messaging application, according to some embodiments. One or more steps in method 1900 may be performed by any one of client devices, servers and databases, as disclosed herein (*e.g.,* client devices 110, servers 130, and databases 152 and 252). In some embodiments, one or more servers may include a messaging engine, a thread engine, or a device management engine, as disclosed herein (*e.g.*, messaging engine 232, thread engine 234, and device management engine 236). In addition, the above engines may use any one of other tools to perform one or more of the steps in method 1900, consistent with this disclosure, such as an encryption tool, an indexing tool, an epoch rotation tool, and a revocation tool (*e.g.*, encryption tool 240, indexing tool 242, backup tool 244, epoch rotation tool 246, and revocation tool 248). In some embodiments, methods consistent with the present disclosure may include one or more steps from method 1900 performed in a different order, simultaneously, quasi-simultaneously, or overlapping in time.

Step 1902 includes receiving, in a messaging engine, a message from a participant in a chat group. In some embodiments, step 1902 may include providing, to a mobile device for the participant in the chat group, an encrypted key to access a message in a thread associated with the chat group. In some embodiments, step 1902 may include receiving, from a mobile device for a participant in a chat group, a request to access a message encrypted key to access a message in a message thread associated with the chat group.

Step 1904 includes updating in a database, with a backup tool, a message index with a message information including a participant list, a message content, a chat group identifier, and a metadata.

Step 1906 includes encrypting, with an encryption tool, the message information. In some embodiments, step 1906 includes encrypting a metadata associated with the message. In some embodiments, step 1906 includes encrypting at least a portion of the message index. In some embodiments, the message information comprises a time-stamp value, and step 1906 includes encrypting the time-stamp value and preserving a message order in a chat thread.

Step 1908 includes storing the message information in a database.

Step 1910 includes providing to at least one participant in the chat group, a key to access the message information from the database. In some embodiments, step 1910 includes linking two consecutive keys. In some embodiments, the message information includes a thread information, and step 1910 includes accessing one or more messages in a conversation thread based on the thread information. In some embodiments, step 1910 includes preventing access of a mobile device of the participant of the chat group to the message information before revoking the mobile device when the mobile device is misused.

FIG. 20 is a flowchart illustrating steps in a method 2000 for backup and data recovery in a message application upon device revocation, according to some embodiments. One or more steps in method 2000 may be performed by any one of client devices, servers and databases, as disclosed herein (*e.g.,* client devices 110, servers 130, and databases 152 and 252). In some embodiments, one or more servers may include a messaging engine, a thread engine, or a device management engine, as disclosed herein (*e.g.*, messaging engine 232, thread engine 234, and device management engine 236). In addition, the above engines may use any one of other tools to perform one or more of the steps in method 2000, consistent with this disclosure, such as an encryption tool, an indexing tool, an epoch rotation tool, and a revocation tool (*e.g.*, encryption tool 240, indexing tool 242, backup tool 244, epoch rotation tool 246, and revocation tool 248). In some embodiments, methods consistent with the present disclosure may include one or more steps from method 2000 performed in a different order, simultaneously, quasi-simultaneously, or overlapping in time.

Step 2002 includes receiving, in a first mobile device used by a participant in a chat group, a first encrypted key from a server hosting the chat group.

Step 2004 includes requesting, to the server hosting the chat group, an access to a message information associated with a thread in the chat group. In some embodiments, the first encrypted key is associated with a time window, and step 2004 includes requesting the access within the time window.

Step 2006 includes providing, to the server hosting the chat group, the first encrypted key upon a prompt by the server to authorize the access to the message information.

In some embodiments, step 2006 includes replacing the first encrypted key by a second encrypted key when the first mobile device used by the participant is revoked. In some embodiments, step 2006 includes requesting a second encrypted key from the server hosting the chat group from a second mobile device used by the participant in the chat group that replaces the first mobile device.

Step 2008 includes storing the message information in a memory of the first mobile device. In some embodiments, step 2008 includes encrypting the message information using a second encrypted key provided by the server hosting the chat group.

## Hardware Overview

FIG. 21 is a block diagram illustrating an exemplary computer system 2100 with which headsets and other client devices 110, and methods 1900 and 2000 can be implemented, according to some embodiments. In certain aspects, computer system 2100 may be implemented using hardware or a combination of software and hardware, either in a dedicated server, or integrated into another entity, or distributed across multiple entities. Computer system 2100 may include a desktop computer, a laptop computer, a tablet, a phablet, a smartphone, a feature phone, a server computer, or otherwise. A server computer may be located remotely in a data center or be stored locally.

Computer system 2100 includes a bus 2108 or other communication mechanism for communicating information, and a processor 2102 (e.g., processors 212) coupled with bus 2108 for processing information. By way of example, the computer system 2100 may be implemented with one or more processors 2102. Processor 2102 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 2100 can include, in addition to hardware, code that creates an execution environment for the computer program in question, e.g., code that constitutes processor firmware, a protocol stack, a database management system, an operating system, or a combination of one or more of them stored in an included memory 2104 (*e.g.*, memories 220), such as a Random Access Memory (RAM), a flash memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled with bus 2108 for storing information and instructions to be executed by processor 2102. The processor 2102 and the memory 2104 can be supplemented by, or incorporated in, special purpose logic circuitry.

The instructions may be stored in the memory 2104 and implemented in one or more computer program products, *e.g.*, one or more modules of computer program instructions encoded on a computer-readable medium for execution by, or to control the operation of, the computer system 2100, and according to any method well known to those of skill in the art, including, but not limited to, computer languages such as data-oriented languages (*e.g.*, SQL, dBase), system languages (*e.g.,* C, Objective-C, C++, Assembly), architectural languages (*e.g.,* Java, .NET), and application languages (*e.g.*, PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, offside rule languages, procedural languages, reflective languages, rule-based languages, scripting languages, stack-based languages, synchronous languages, syntax handling languages, visual languages, wirth languages, and xml-based languages. Memory 2104 may also be used for storing temporary variable or other intermediate information during execution of instructions to be executed by processor 2102.

A computer program as discussed herein does not necessarily correspond to a file in a file system. A program can be stored in a portion of a file that holds other programs or data (*e.g.,* one or more scripts stored in a markup language document), in a single file dedicated to the program in question, or in multiple coordinated files (*e.g.,* files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 2100 further includes a data storage device 2106 such as a magnetic disk or optical disk, coupled with bus 2108 for storing information and instructions. Computer system 2100 may be coupled via input/output module 2110 to various devices. Input/output module 2110 can be any input/output module. Exemplary input/output modules 2110 include data ports such as USB ports. The input/output module 2110 is configured to connect to a communications module 2112. Exemplary communications modules 2112 include networking interface cards, such as Ethernet cards and modems. In certain aspects, input/output module 2110 is configured to connect to a plurality of devices, such as an input device 2114 and/or an output device 2116. Exemplary input devices 2114 include a keyboard and a pointing device, *e.g.,* a mouse or a trackball, by which a consumer can provide input to the computer system 2100. Other kinds of input devices 2114 can be used to provide for interaction with a consumer as well, such as a tactile input device, visual input device, audio input device, or brain-computer interface device. For example, feedback provided to the consumer can be any form of sensory feedback, *e.g*., visual feedback, auditory feedback, or tactile feedback; and input from the consumer can be received in any form, including acoustic, speech, tactile, or brain wave input. Exemplary output devices 2116 include display devices, such as an LCD (liquid crystal display) monitor, for displaying information to the consumer.

According to one aspect of the present disclosure, headsets and client devices 110 can be implemented, at least partially, using a computer system 2100 in response to processor 2102 executing one or more sequences of one or more instructions contained in memory 2104. Such instructions may be read into memory 2104 from another machine-readable medium, such as data storage device 2106. Execution of the sequences of instructions contained in main memory 2104 causes processor 2102 to perform the process steps described herein. One or more processors in a multi-processing arrangement may also be employed to execute the sequences of instructions contained in memory 2104. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component, *e.g.*, a data server, or that includes a middleware component, *e.g.,* an application server, or that includes a front end component, *e.g.,* a client computer having a graphical consumer interface or a Web browser through which a consumer can interact with an implementation of the subject matter described in this specification, or any combination of one or more such back end, middleware, or front end components. The components of the system can be interconnected by any form or medium of digital data communication, *e.g*., a communication network. The communication network can include, for example, any one or more of a LAN, a WAN, the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Computer system 2100 can include clients and servers. A client and server are generally remote from each other and typically interact through a communication network. The relationship of client and server arises by virtue of computer programs running on the respective computers and having a client-server relationship to each other. Computer system 2100 can be, for example, and without limitation, a desktop computer, laptop computer, or tablet computer. Computer system 2100 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 2102 for execution. Such a medium may take many forms, including, but not limited to, non-volatile media, volatile media, and transmission media. Non-volatile media include, for example, optical or magnetic disks, such as data storage device 2106. Volatile media include dynamic memory, such as memory 2104. Transmission media include coaxial cables, copper wire, and fiber optics, including the wires forming bus 2108. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter affecting a machine-readable propagated signal, or a combination of one or more of them.

To illustrate the interchangeability of hardware and software, items such as the various illustrative blocks, modules, components, methods, operations, instructions, and algorithms have been described generally in terms of their functionality. Whether such functionality is implemented as hardware, software, or a combination of hardware and software depends upon the particular application and design constraints imposed on the overall system. Skilled artisans may implement the described functionality in varying ways for each particular application.

As used herein, the phrase "at least one of' preceding a series of items, with the terms "and" or "or" to separate any of the items, modifies the list as a whole, rather than each member of the list (*e.g.,* each item). The phrase "at least one of' does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The word "exemplary" is used herein to mean "serving as an example, instance, or illustration." Any embodiment described herein as "exemplary" is not necessarily to be construed as preferred or advantageous over other embodiments. Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, and other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

A reference to an element in the singular is not intended to mean "one and only one" unless specifically stated, but rather "one or more." The term "some" refers to one or more. Underlined and/or italicized headings and subheadings are used for convenience only, do not limit the subject technology, and are not referred to in connection with the interpretation of the description of the subject technology. Relational terms such as first and second and the like may be used to distinguish one entity or action from another without necessarily requiring or implying any actual such relationship or order between such entities or actions. All structural and functional equivalents to the elements of the various configurations described throughout this disclosure that are known or later come to be known to those of ordinary skill in the art are intended to be expressly incorporated herein by reference and intended to be encompassed by the subject technology. Moreover, nothing disclosed herein is intended to be dedicated to the public, regardless of whether such disclosure is explicitly recited in the above description.

While this specification contains many specifics, these should not be construed as limitations on the scope of what may be described, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially described as such, one or more features from a described combination can in some cases be excised from the combination, and the described combination may be directed to a subcombination or variation of a subcombination.

The subject matter of this specification has been described in terms of particular aspects, but other aspects can be implemented and are within the scope of the following claims. For example, while operations are depicted in the drawings in a particular order, this should not be understood as requiring that such operations be performed in the particular order shown or in sequential order, or that all illustrated operations be performed, to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products.

The title, background, brief description of the drawings, abstract, and drawings are hereby incorporated into the disclosure and are provided as illustrative examples of the disclosure, not as restrictive descriptions. It is submitted with the understanding that they will not be used to limit the scope or meaning of the claims. In addition, in the detailed description, it can be seen that the description provides illustrative examples and the various features are grouped together in various implementations for the purpose of streamlining the disclosure. The method of disclosure is not to be interpreted as reflecting an intention that the described subject matter requires more features than are expressly recited in each claim. Rather, as the claims reflect, inventive subject matter lies in less than all features of a single disclosed configuration or operation. The claims are hereby incorporated into the detailed description, with each claim standing on its own as a separately described subject matter.

The claims are not intended to be limited to the aspects described herein, but are to be accorded the full scope consistent with the language claims and to encompass all legal equivalents. Notwithstanding, none of the claims are intended to embrace subject matter that fails to satisfy the requirements of the applicable patent law, nor should they be interpreted in such a way.

## Claims

**1.** A computer-implemented method, comprising:

receiving, in a messaging engine, a message from a participant in a chat group;
updating in a database, with a backup tool, a message index with a message information including a participant list, a message content, a chat group identifier, and a metadata;
encrypting, with an encryption tool, the message information;
storing the message information in a database; and
providing to at least one participant in the chat group, a key to access the message information from the database.

**2.** The computer-implemented method of claim 1, wherein encrypting the message information comprises encrypting one or more of:

i. a metadata associated with the message;
ii. at least a portion of the message index.

**3.** The computer-implemented method of claim 1 or claim 2, further comprising one or more of:

i. providing, to a mobile device for the participant in the chat group, an encrypted key to access a message in a thread associated with the chat group;
ii. receiving, from a mobile device for a participant in a chat group, a request to access a message encrypted key to access a message in a message thread associated with the chat group.

**4.** The computer-implemented method of claim 1, claim 2 or claim 3, wherein providing an access to retrieve the message, or the message information comprises providing multiple time-dependent encrypted keys.

5. The computer-implemented method of any one of the preceding claims, wherein providing a key to access the message information comprises linking two consecutive keys.

6. The computer-implemented method of any one of the preceding claims, wherein the message information includes a thread information, further comprising accessing one or more messages in a conversation thread based on the thread information.

7. The computer-implemented method of any one of the preceding claims, further comprising preventing access of a mobile device of the participant of the chat group to the message information before revoking the mobile device when the mobile device is misused.

8. The computer-implemented method of any one of the preceding claims, wherein the message information comprises a time-stamp value, further comprising encrypting the time-stamp value and preserving a message order in a chat thread.

9. A system, comprising:

one or more processors; and
a memory storing instructions which, when executed by the one or more processors, cause the system to perform operations, comprising:

receive, in a messaging engine, a message from a participant in a chat group;
update in a database, with a backup tool, a message index with a message information including a participant list, a message content, a chat group identifier, and a metadata;
encrypt, with an encryption tool, the message information;
store the message information in a database; and
provide to at least one participant in the chat group, a key to access the message information from the database.

10. The system of claim 9, wherein to encrypt the message information the one or more processors execute instructions to encrypt one or more of:

i. a metadata associated with the message;
ii. at least a portion of the message index.

11. The system of claim 9 or claim 10, wherein the one or more processors further execute instructions to one or more of:

i. provide, to a mobile device for the participant in the chat group, an encrypted key to access a message in a thread associated with the chat group;
ii. receive, from a mobile device for a participant in a chat group, a request to access a message encrypted key to access a message in a message thread associated with the chat group.

12. A computer-implemented method, comprising:

receiving, in a first mobile device used by a participant in a chat group, a first encrypted key from a server hosting the chat group;
requesting, to the server hosting the chat group, an access to a message information associated with a thread in the chat group;
providing, to the server hosting the chat group, the first encrypted key upon a prompt by the server to authorize the access to the message information; and
storing the message information in a memory of the first mobile device.

13. The computer-implemented method of claim 12, wherein the first encrypted key is associated with a time window, and requesting the access to the message information comprises requesting the access within the time window.

14. The computer-implemented method of claim 12, or claim 13, further comprising one or more of:

i. replacing the first encrypted key by a second encrypted key when the first mobile device used by the participant is revoked;
ii. requesting a second encrypted key from the server hosting the chat group from a second mobile device used by the participant in the chat group that replaces the first mobile device.

**15.** The computer-implemented method of claim 12, claim 13 or claim 14, wherein storing the message information in a memory of the first mobile device comprises encrypting the message information using a second encrypted key provided by the server hosting the chat group.

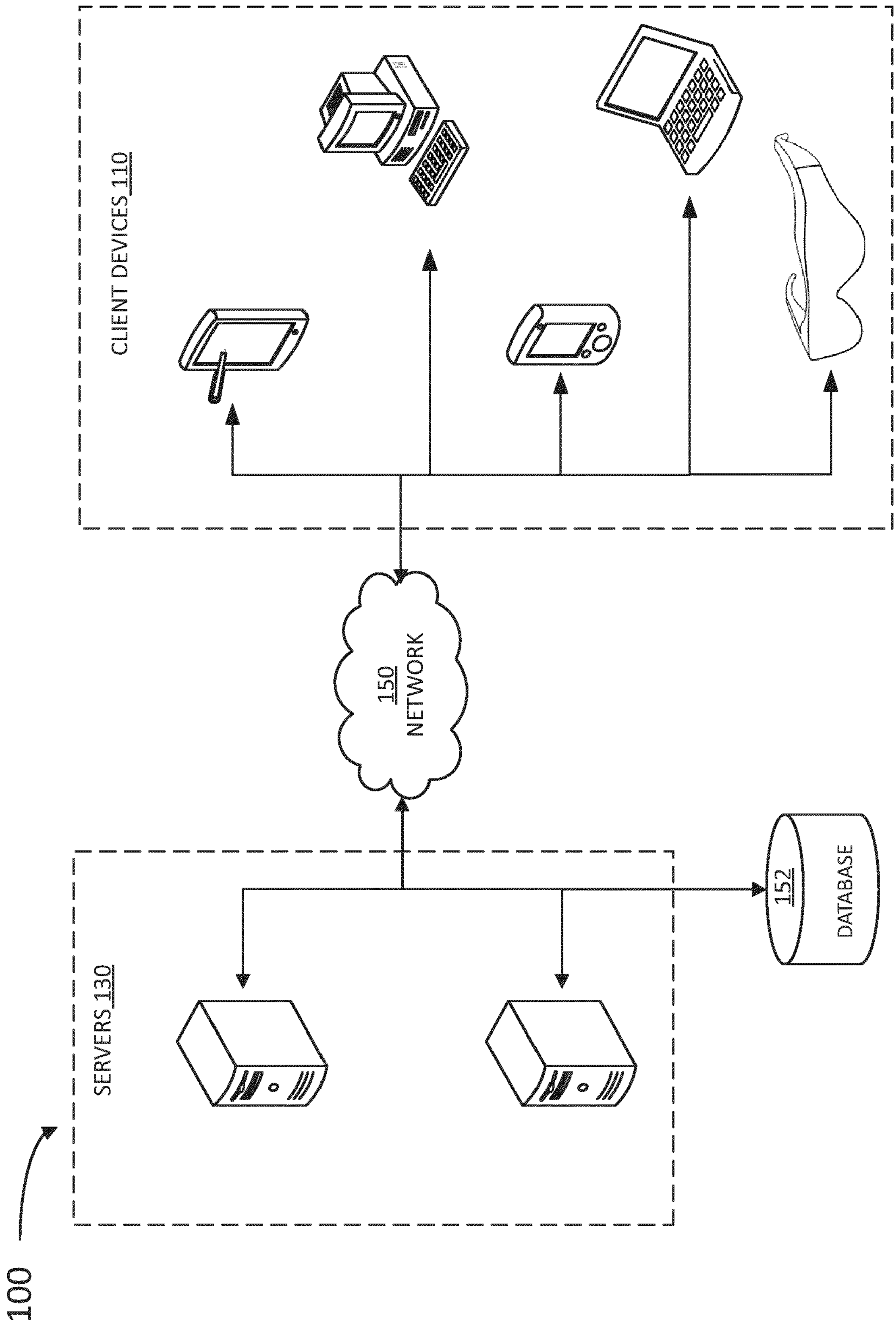
100
SERVERS 130
CLIENT DEVICES 110
150
NETWORK
152
DATABASE

FIG. 1

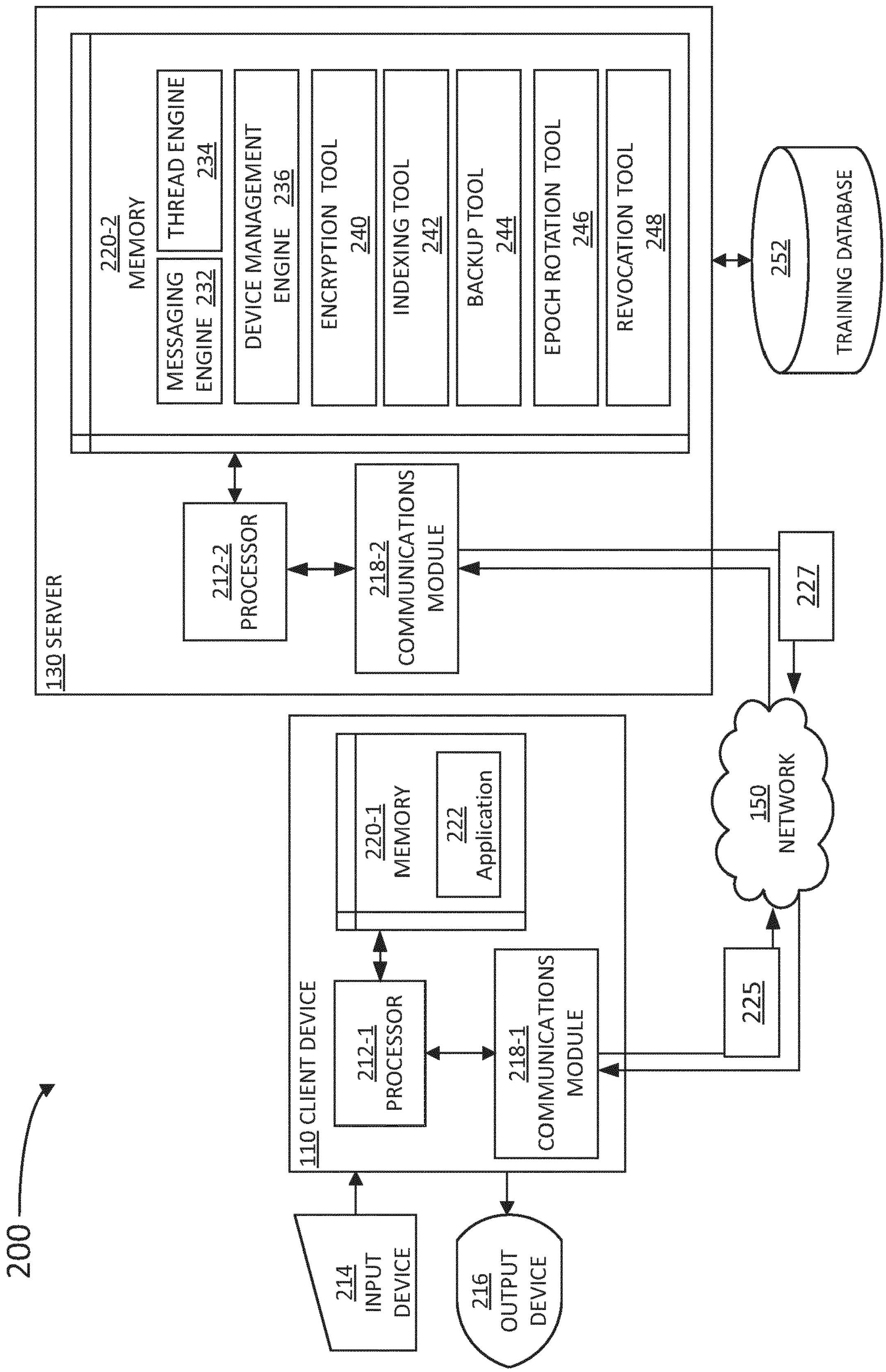
200
130 SERVER
220-2
MEMORY
MESSAGING ENGINE 232
THREAD ENGINE 234
DEVICE MANAGEMENT ENGINE 236
ENCRYPTION TOOL 240
INDEXING TOOL 242
BACKUP TOOL 244
EPOCH ROTATION TOOL 246
REVOCATION TOOL 248
212-2 PROCESSOR
218-2 COMMUNICATIONS MODULE
252
TRAINING DATABASE
227
150 NETWORK
225
110 CLIENT DEVICE
220-1 MEMORY
222 Application
212-1 PROCESSOR
218-1 COMMUNICATIONS MODULE
214 INPUT DEVICE
216 OUTPUT DEVICE

FIG. 2

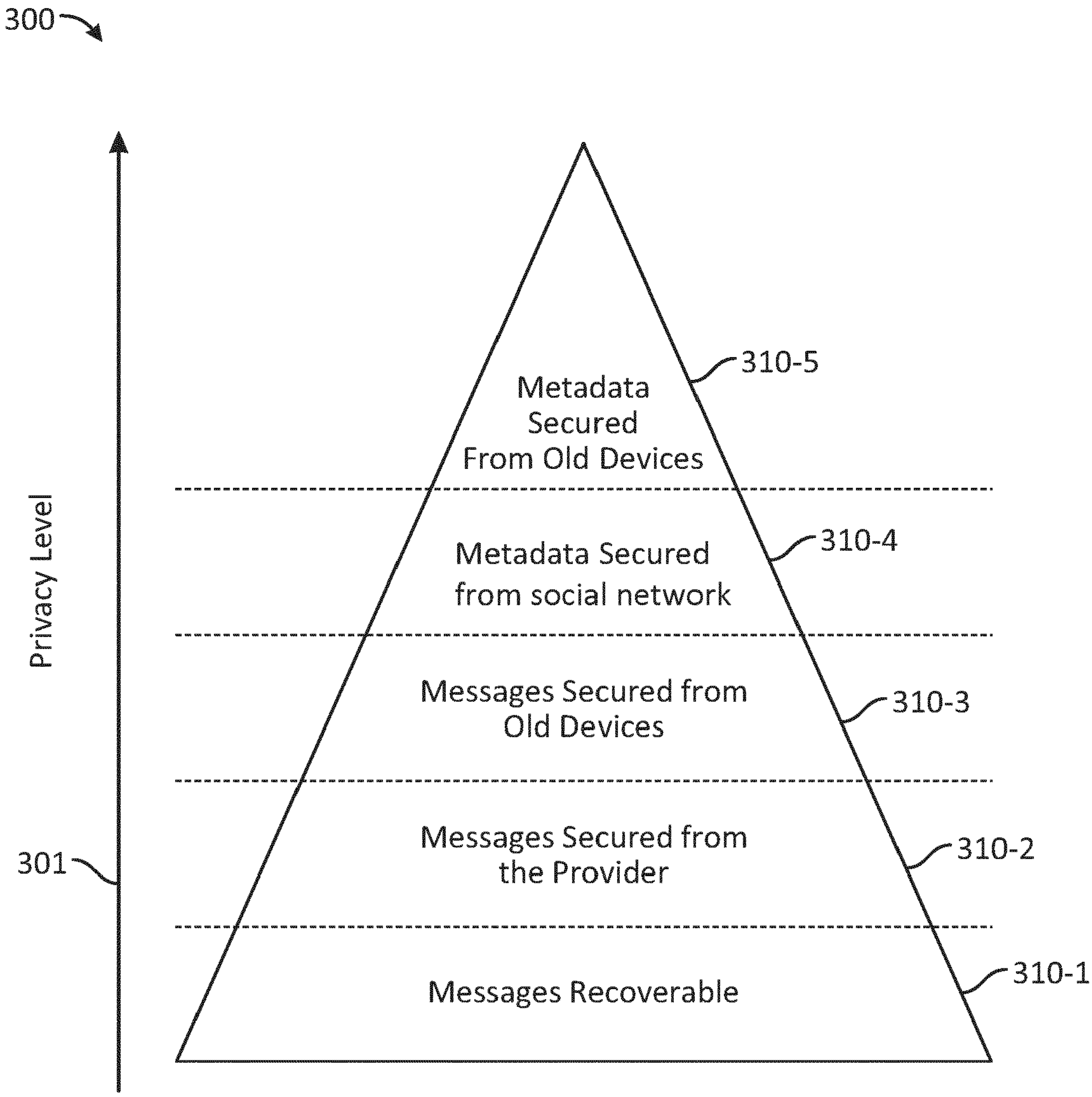
300
Privacy Level
301
Metadata
Secured
From Old Devices
310-5
Metadata Secured
from social network
310-4
Messages Secured from
Old Devices
310-3
Messages Secured from
the Provider
310-2
Messages Recoverable
310-1

FIG. 3

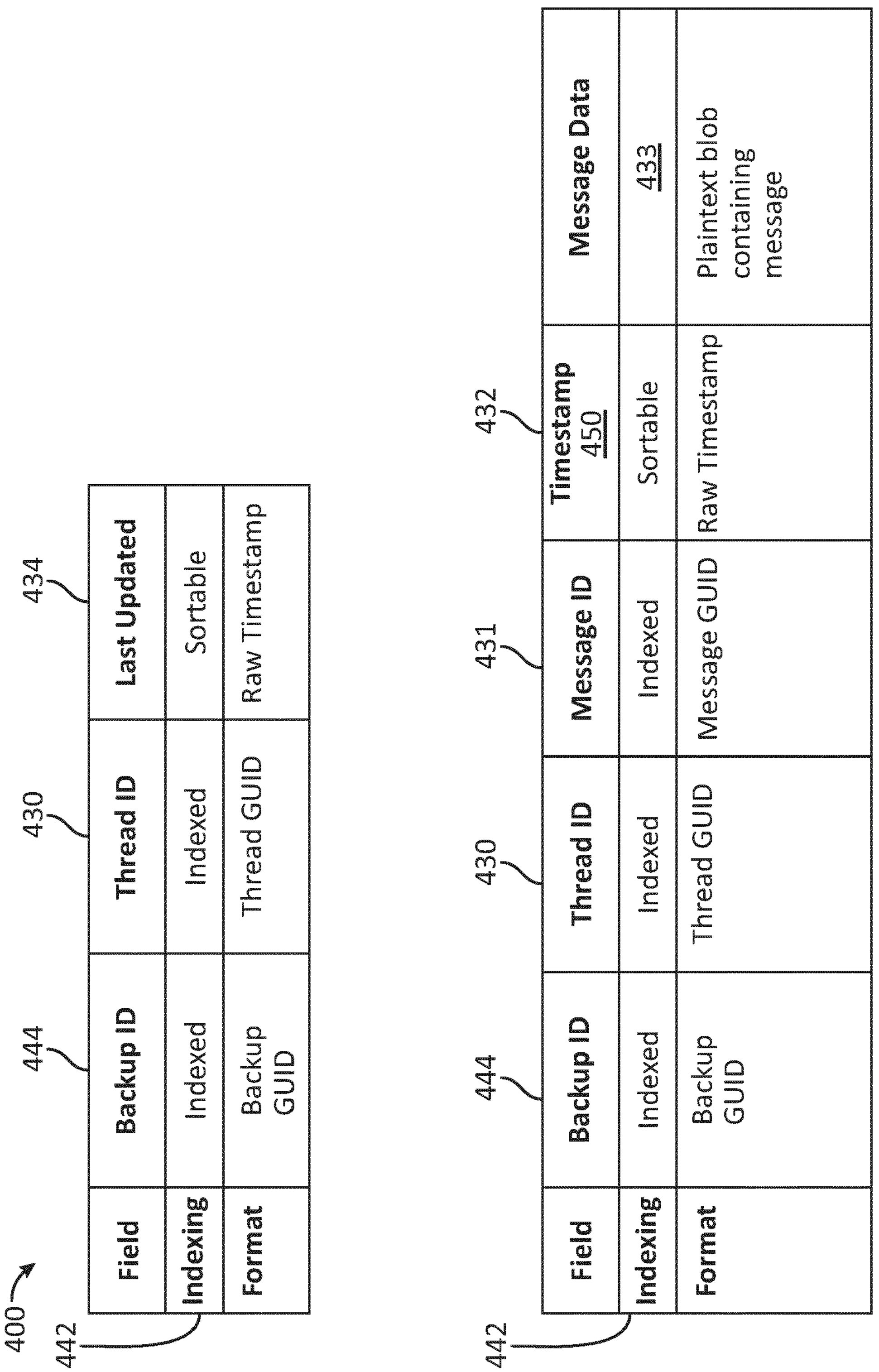
400
442
Field
Indexing
Format
444
Backup ID
Indexed
Backup GUID
430
Thread ID
Indexed
Thread GUID
434
Last Updated
Sortable
Raw Timestamp
442
Field
Indexing
Format
444
Backup ID
Indexed
Backup GUID
430
Thread ID
Indexed
Thread GUID
431
Message ID
Indexed
Message GUID
432
Timestamp
450
Sortable
Raw Timestamp
Message Data
433
Plaintext blob containing message

FIG. 4

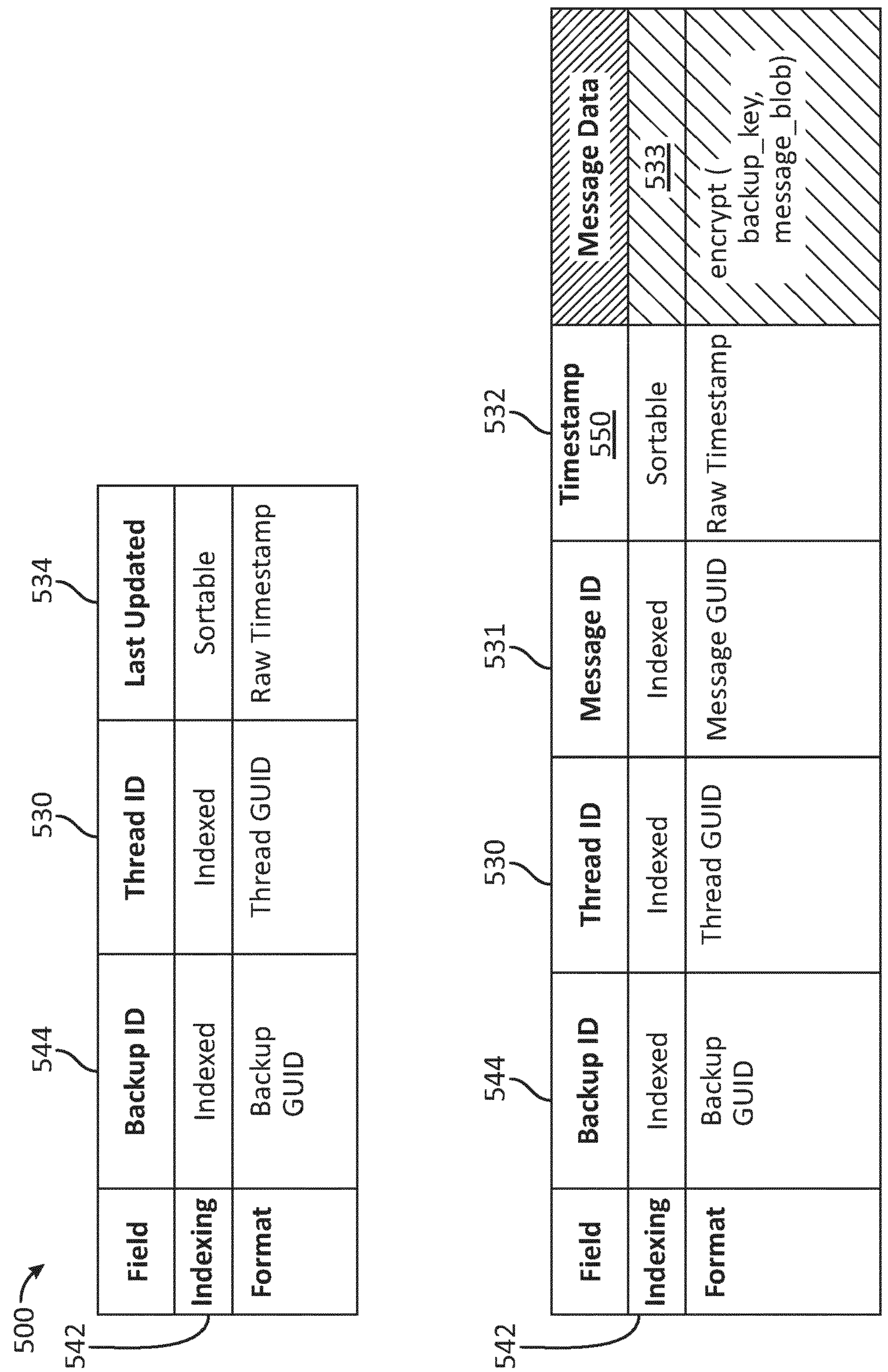
500
542
544
530
534
Field
Indexing
Format
Backup ID
Indexed
Backup GUID
Thread ID
Indexed
Thread GUID
Last Updated
Sortable
Raw Timestamp
542
544
530
531
532
Message ID
Indexed
Message GUID
Timestamp
550
Sortable
Raw Timestamp
Message Data
533
encrypt ( backup_key, message_blob)

FIG. 5

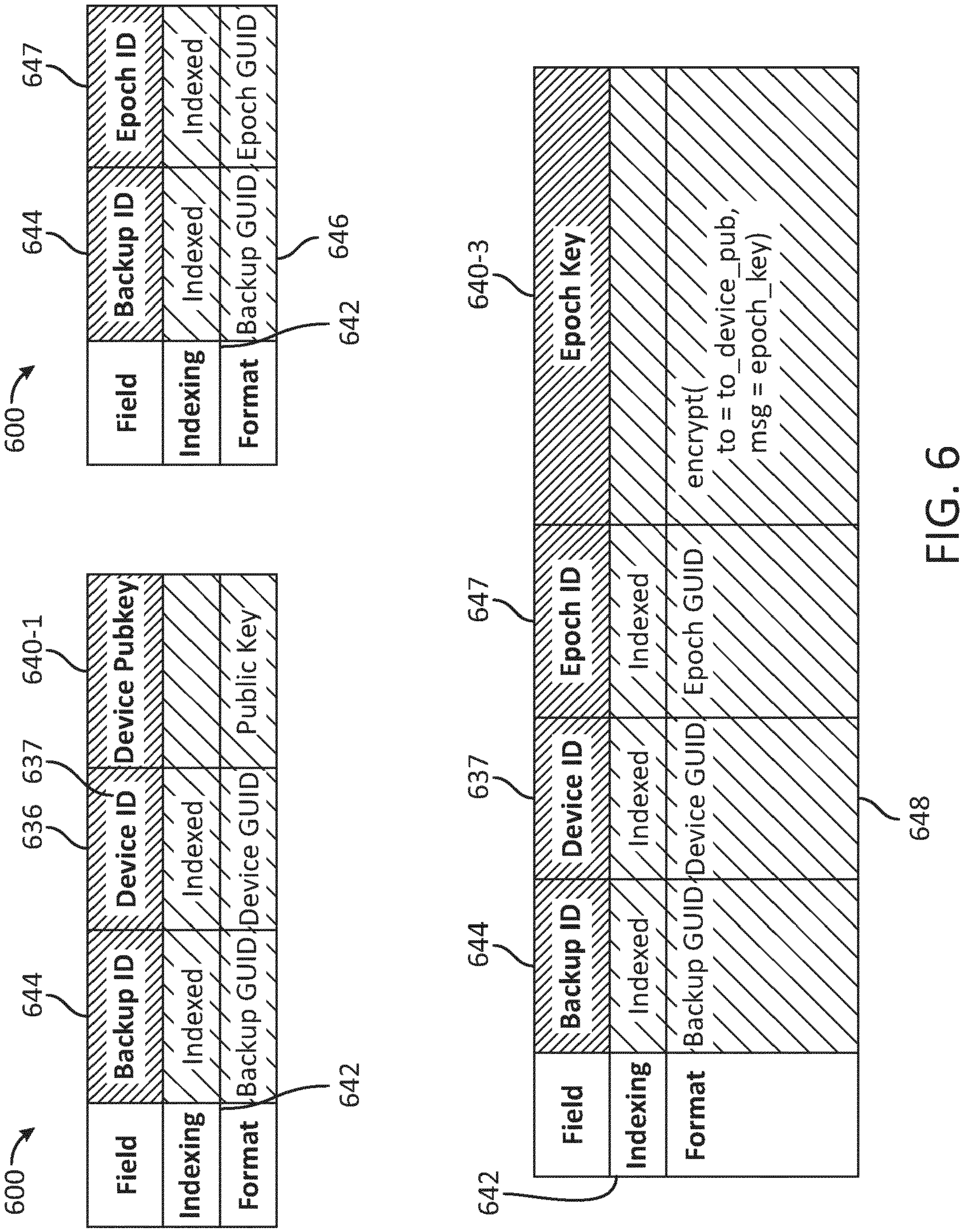
600
Field
Indexing
Format
644
Backup ID
Indexed
Backup GUID
636
637
Device ID
Indexed
Device GUID
640-1
Device Pubkey
Public Key
642
600
Field
Indexing
Format
644
Backup ID
Indexed
Backup GUID
646
647
Epoch ID
Indexed
Epoch GUID
642
642
Field
Indexing
Format
644
Backup ID
Indexed
Backup GUID
637
Device ID
Indexed
Device GUID
647
Epoch ID
Indexed
Epoch GUID
640-3
Epoch Key
encrypt(
to = to_device_pub,
msg = epoch_key)
648

FIG. 6

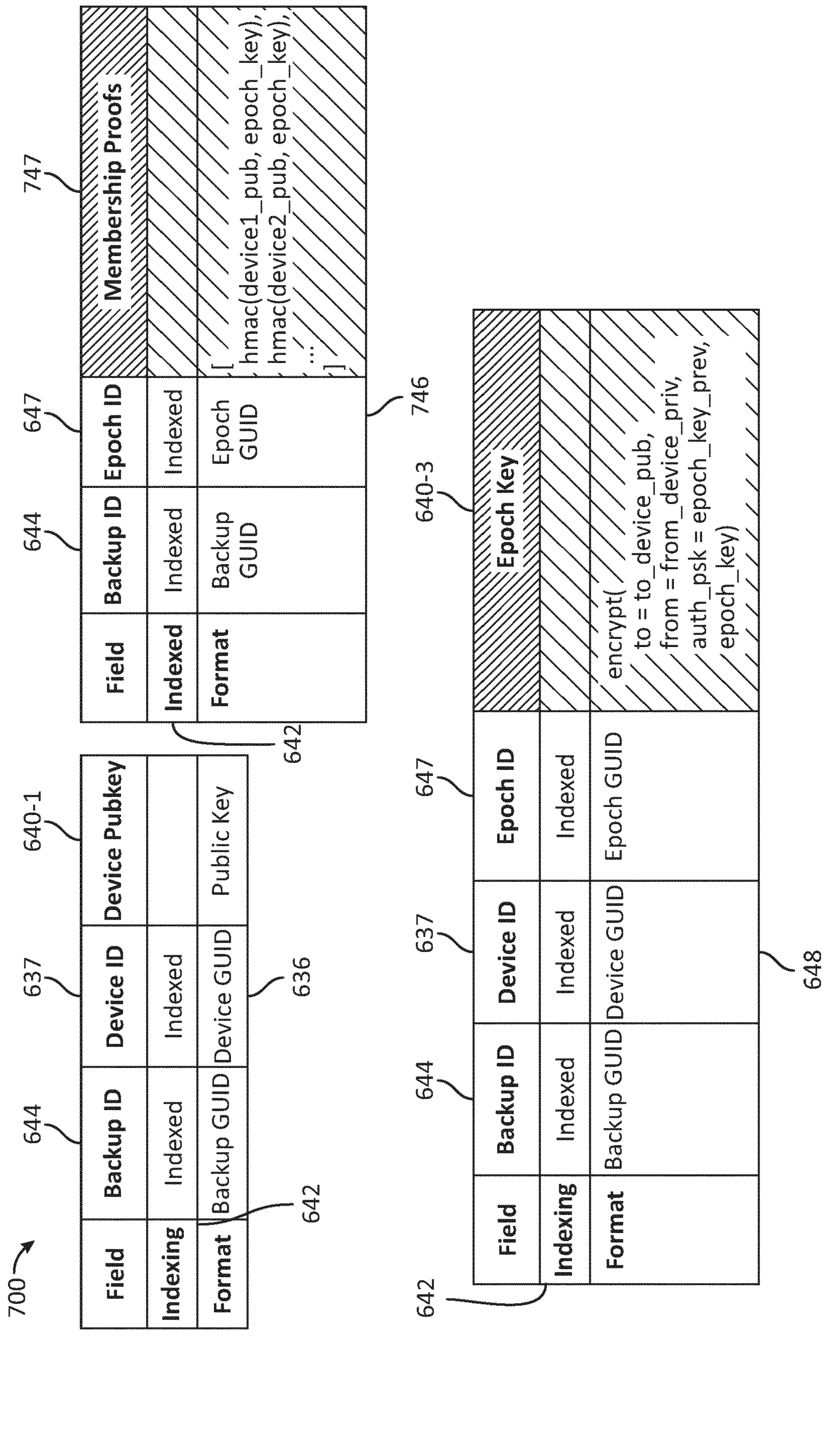
700
Field
Indexing
Format
Backup ID
Indexed
Backup GUID
Device ID
Indexed
Device GUID
Device Pubkey
Public Key
644
637
640-1
636
642
Field
Indexed
Format
Backup ID
Indexed
Backup GUID
Epoch ID
Indexed
Epoch GUID
Membership Proofs
[
hmac(device1_pub, epoch_key),
hmac(device2_pub, epoch_key),
...
]
644
647
747
746
642
Field
Indexing
Format
Backup ID
Indexed
Backup GUID
Device ID
Indexed
Device GUID
Epoch ID
Indexed
Epoch GUID
Epoch Key
encrypt(
to = to_device_pub,
from = from_device_priv,
auth_psk = epoch_key_prev,
epoch_key)
644
637
647
640-3
642
648

FIG. 7

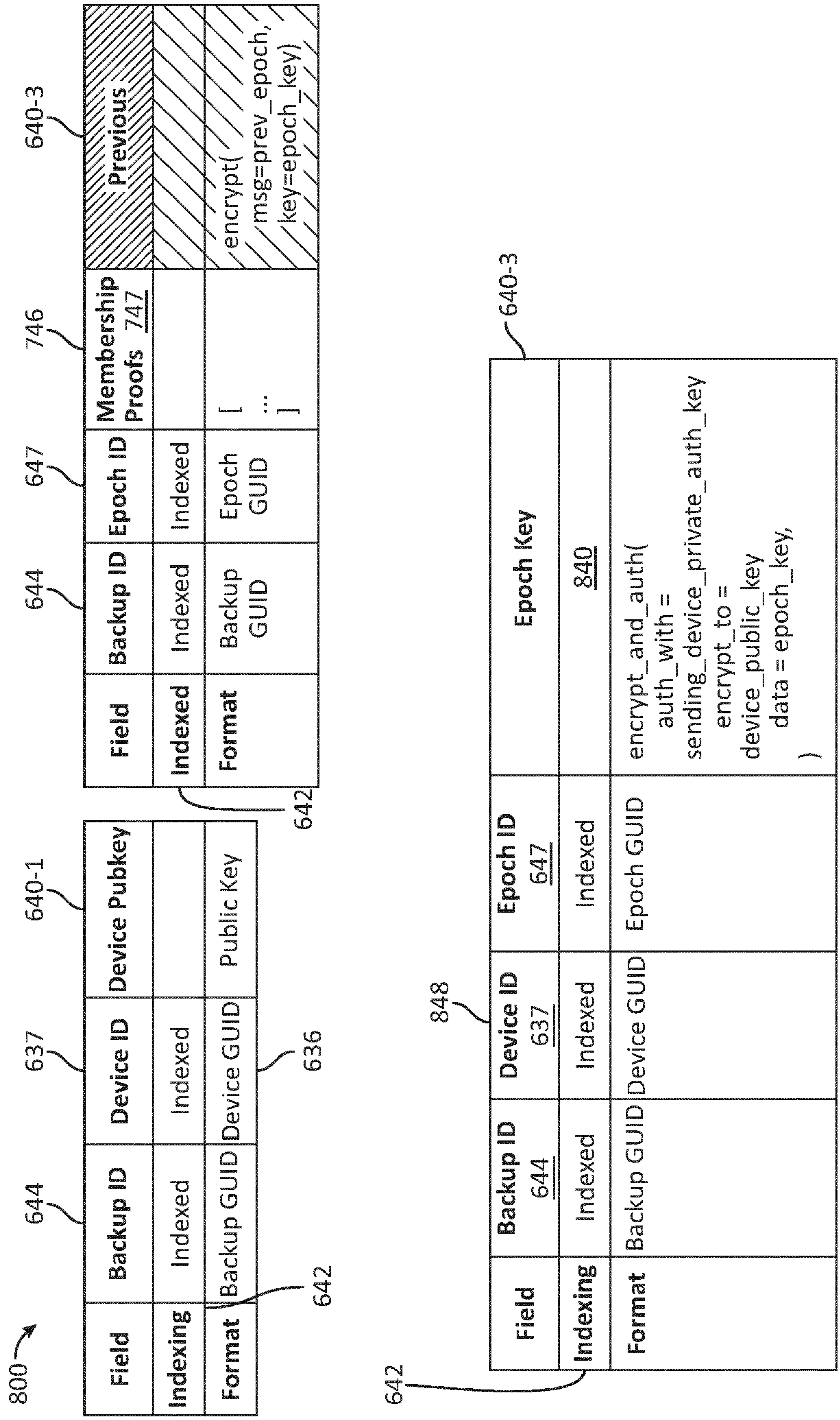
800
644
637
640-1
Field
Backup ID
Device ID
Device Pubkey
Indexing
Indexed
Indexed
Format
Backup GUID
Device GUID
Public Key
642
636
644
647
746
640-3
Field
Backup ID
Epoch ID
Membership Proofs 747
Previous
Indexed
Indexed
Indexed
Format
Backup GUID
Epoch GUID
[ ... ]
encrypt( msg=prev_epoch, key=epoch_key)
642
848
640-3
Field
Backup ID 644
Device ID 637
Epoch ID 647
Epoch Key
Indexing
Indexed
Indexed
Indexed
840
Format
Backup GUID
Device GUID
Epoch GUID
encrypt_and_auth( auth_with = sending_device_private_auth_key encrypt_to = device_public_key data = epoch_key, )
642

FIG. 8

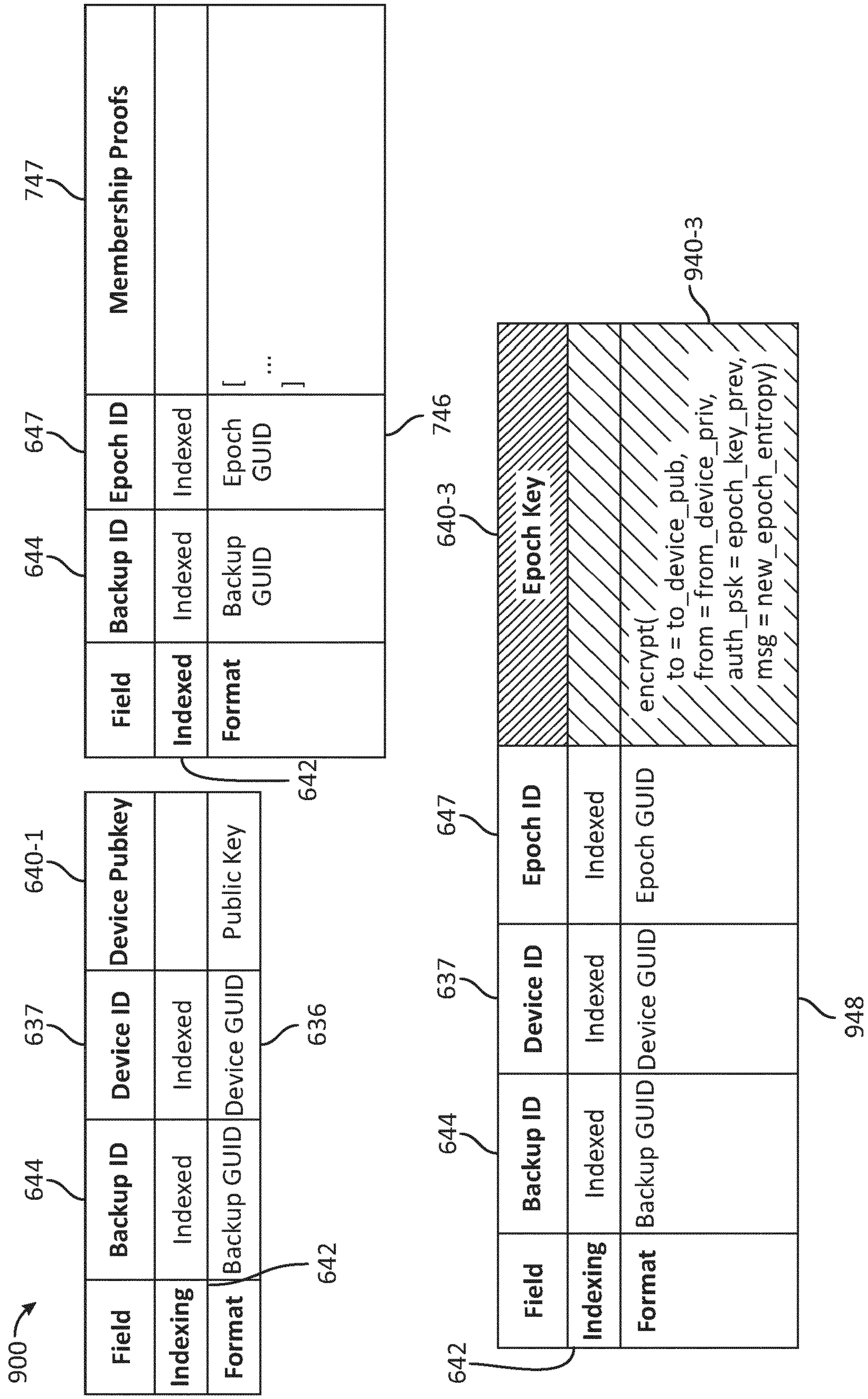
900
Field
Indexing
Format
Backup ID
Indexed
Backup GUID
Device ID
Indexed
Device GUID
Device Pubkey
Public Key
644
637
640-1
636
642
Field
Indexed
Format
Backup ID
Indexed
Backup GUID
Epoch ID
Indexed
Epoch GUID
Membership Proofs
[
...
]
644
647
747
746
642
Field
Indexing
Format
Backup ID
Indexed
Backup GUID
Device ID
Indexed
Device GUID
Epoch ID
Indexed
Epoch GUID
Epoch Key
encrypt(
to = to_device_pub,
from = from_device_priv,
auth_psk = epoch_key_prev,
msg = new_epoch_entropy)
642
644
637
647
640-3
940-3
948

FIG. 9

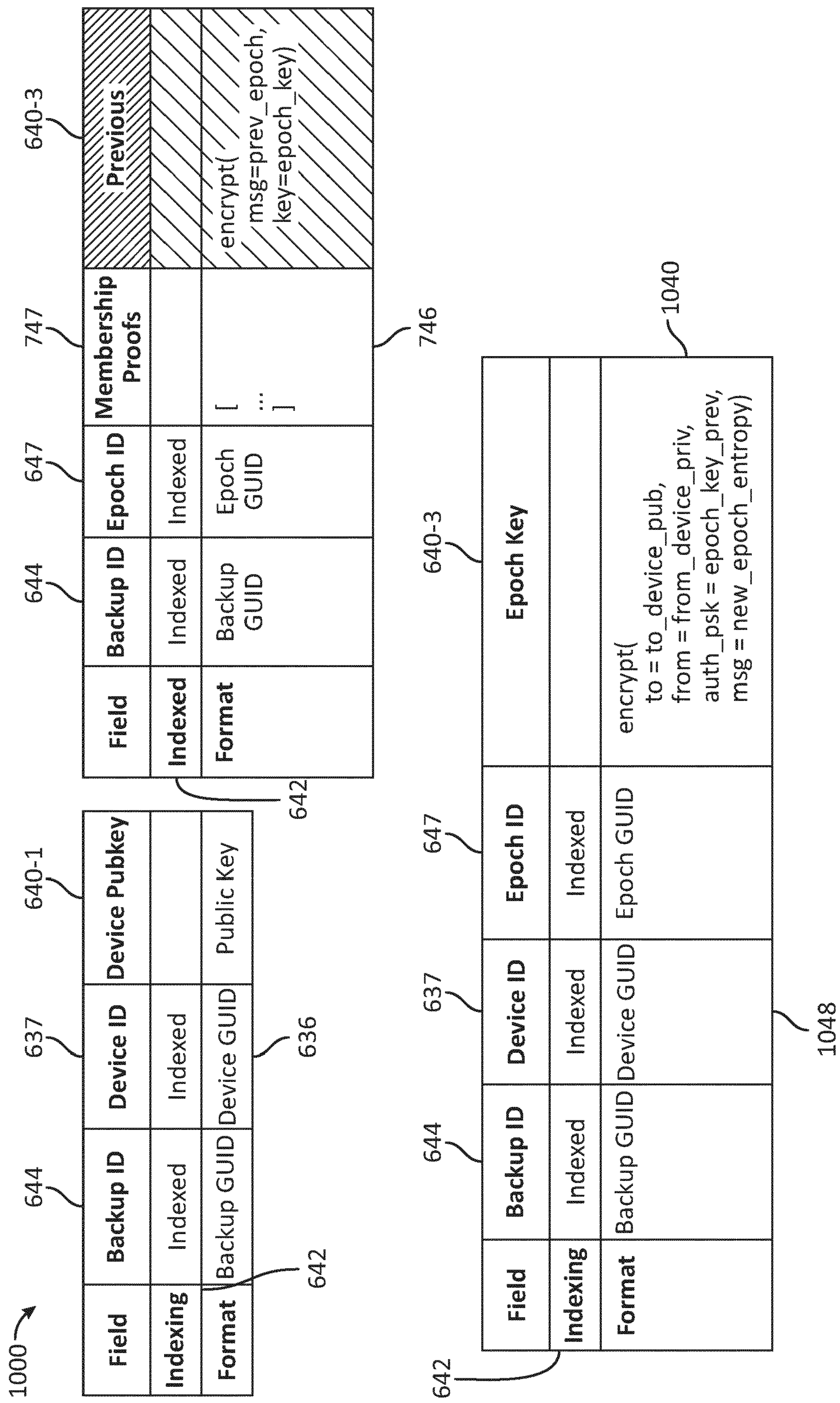

1000
Field
Indexing
Format
Backup ID
Indexed
Backup GUID
Device ID
Indexed
Device GUID
Device Pubkey
Public Key
644
637
640-1
636
642
Field
Indexed
Format
Backup ID
Indexed
Backup GUID
Epoch ID
Indexed
Epoch GUID
Membership Proofs
[
...
]
Previous
encrypt(
msg=prev_epoch,
key=epoch_key)
644
647
747
640-3
746
642
Field
Indexing
Format
Backup ID
Indexed
Backup GUID
Device ID
Indexed
Device GUID
Epoch ID
Indexed
Epoch GUID
Epoch Key
encrypt(
to = to_device_pub,
from = from_device_priv,
auth_psk = epoch_key_prev,
msg = new_epoch_entropy)
642
644
637
647
640-3
1040
1048


FIG. 10

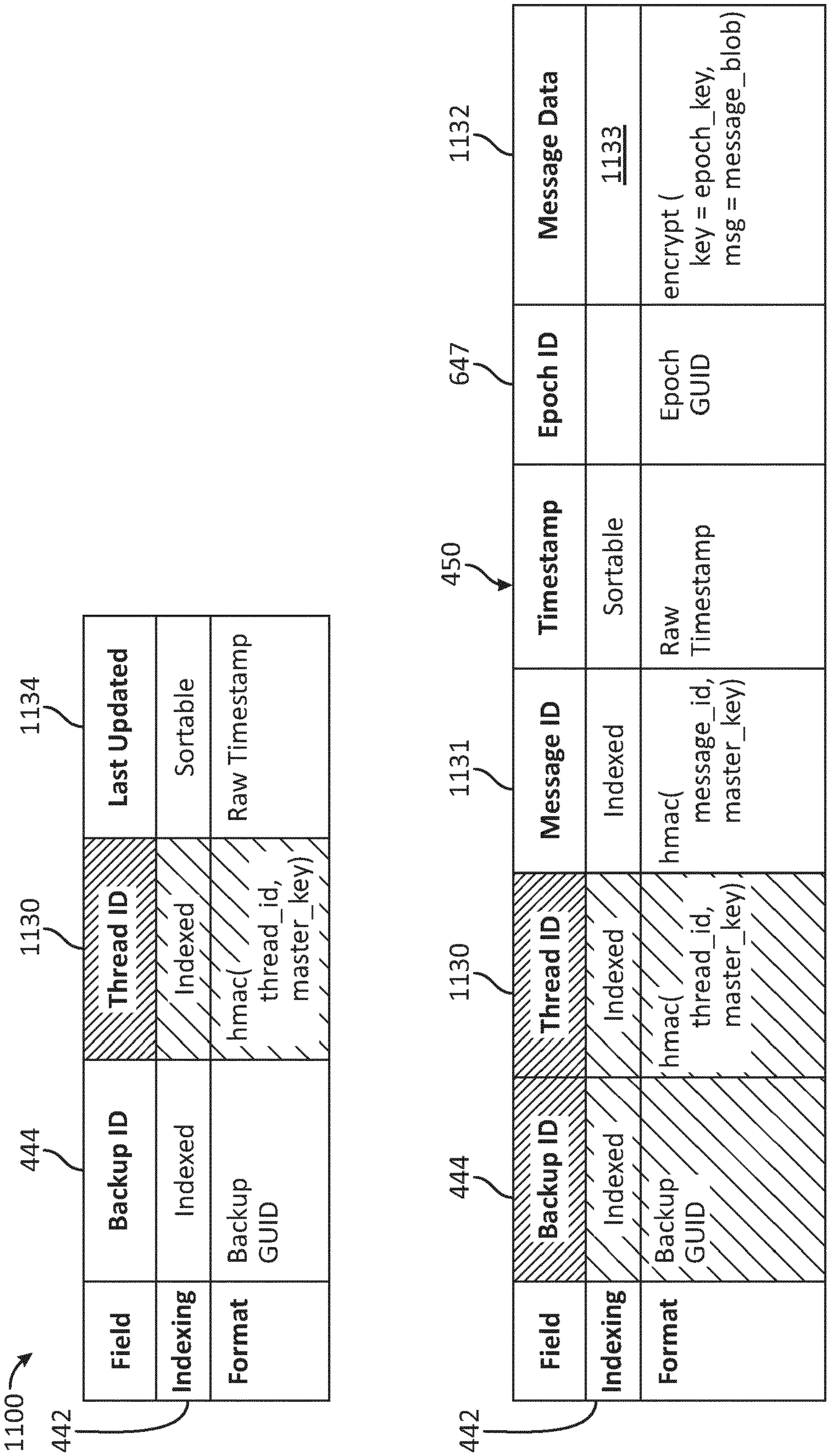
1100
442
444
1130
1134
Field
Indexing
Format
Backup ID
Indexed
Backup GUID
Thread ID
Indexed
hmac( thread_id, master_key)
Last Updated
Sortable
Raw Timestamp
442
444
1130
1131
450
647
1132
Field
Indexing
Format
Backup ID
Indexed
Backup GUID
Thread ID
Indexed
hmac( thread_id, master_key)
Message ID
Indexed
hmac( message_id, master_key)
Timestamp
Sortable
Raw Timestamp
Epoch ID
Epoch GUID
Message Data
1133
encrypt ( key = epoch_key, msg = message_blob)

FIG. 11

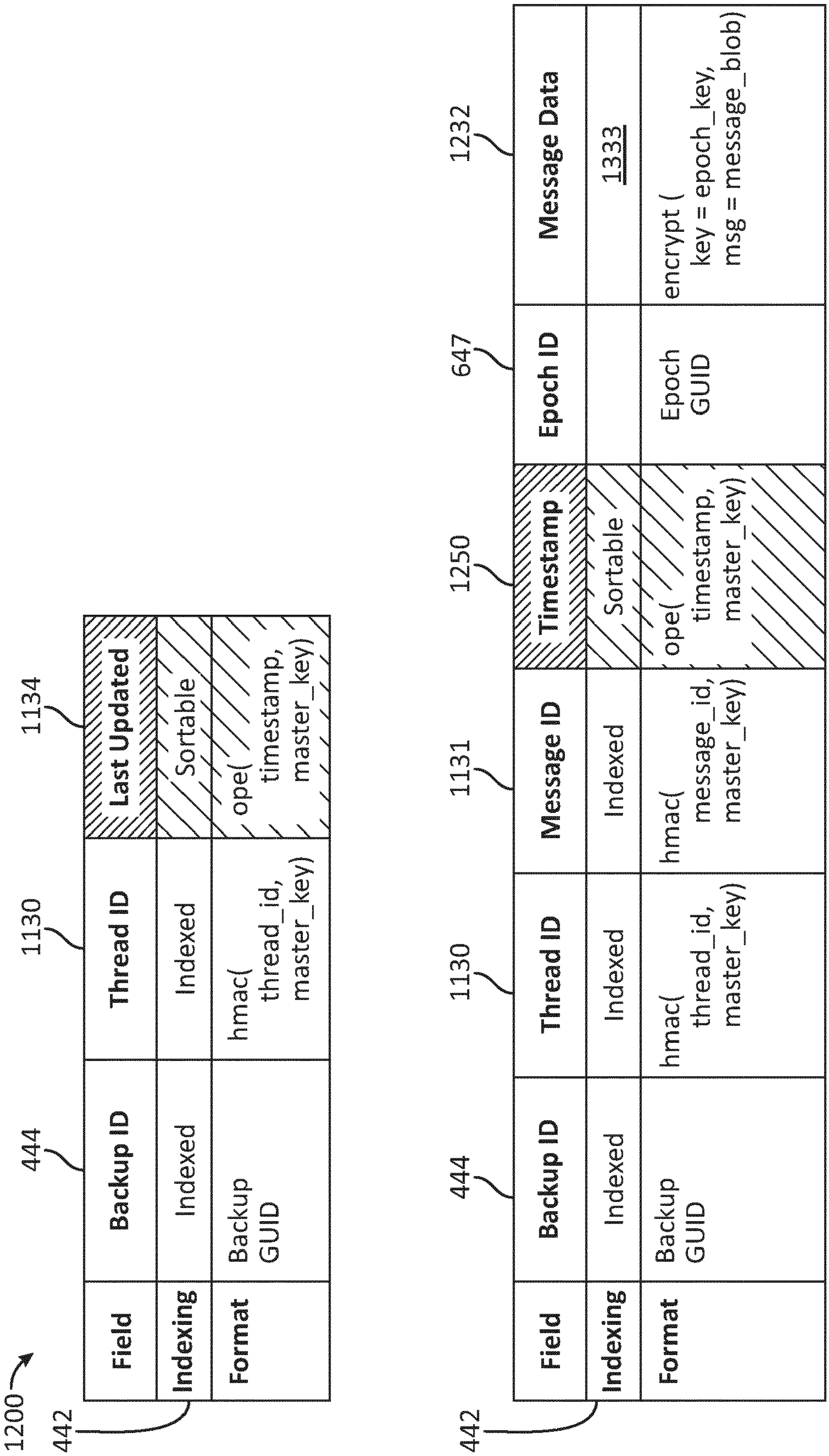
1200
442
444
1130
1134
Field
Indexing
Format
Backup ID
Indexed
Backup GUID
Thread ID
Indexed
hmac( thread_id, master_key)
Last Updated
Sortable
ope( timestamp, master_key)
442
444
1130
1131
1250
647
1232
Field
Indexing
Format
Backup ID
Indexed
Backup GUID
Thread ID
Indexed
hmac( thread_id, master_key)
Message ID
Indexed
hmac( message_id, master_key)
Timestamp
Sortable
ope( timestamp, master_key)
Epoch ID
Epoch GUID
Message Data
1333
encrypt ( key = epoch_key, msg = message_blob)

FIG. 12

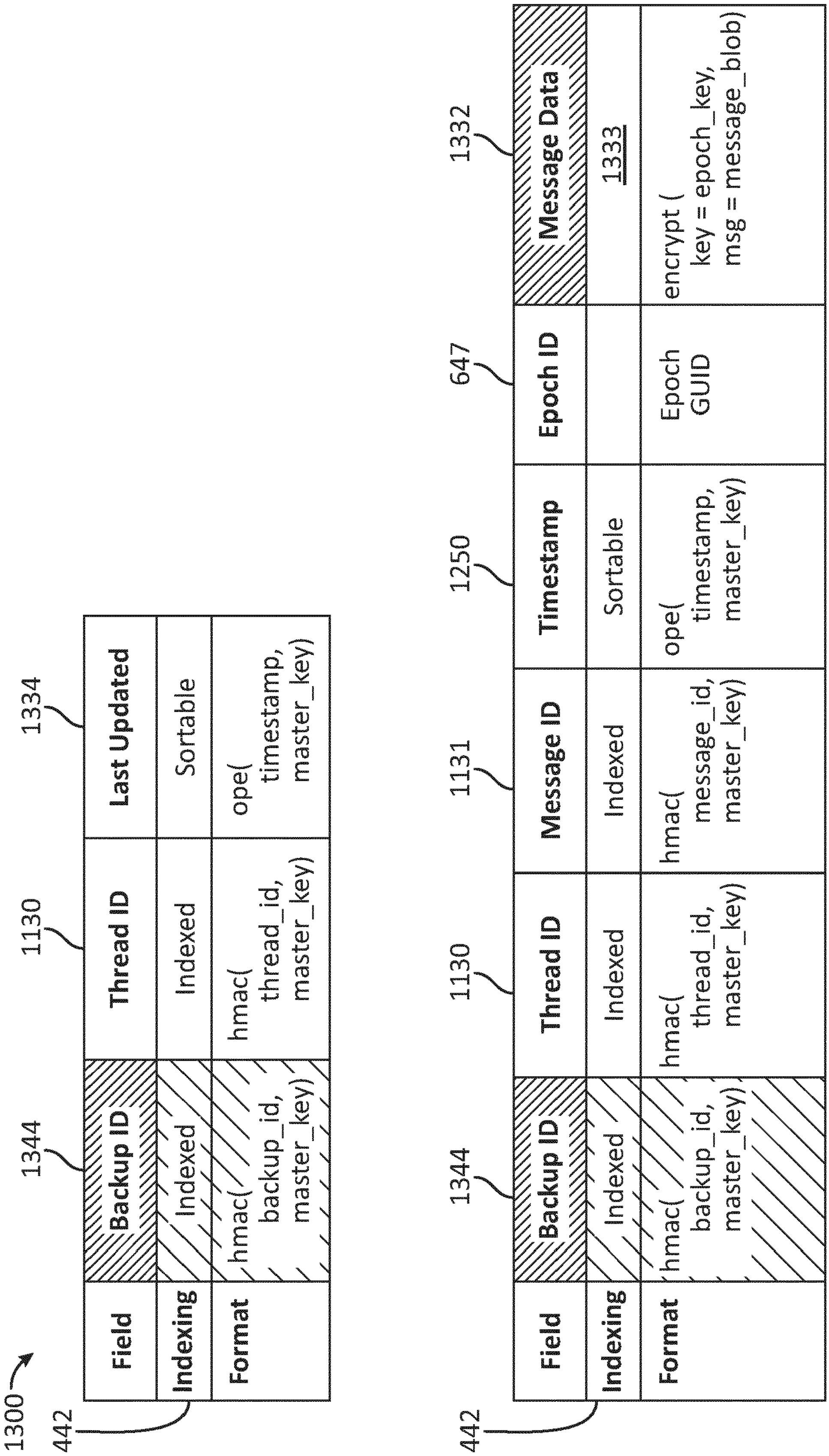
1300
442
1344
1130
1334
Field
Indexing
Format
Backup ID
Indexed
hmac( backup_id, master_key)
Thread ID
Indexed
hmac( thread_id, master_key)
Last Updated
Sortable
ope( timestamp, master_key)
442
1344
1130
1131
1250
647
1332
Field
Indexing
Format
Backup ID
Indexed
hmac( backup_id, master_key)
Thread ID
Indexed
hmac( thread_id, master_key)
Message ID
Indexed
hmac( message_id, master_key)
Timestamp
Sortable
ope( timestamp, master_key)
Epoch ID
Epoch GUID
Message Data
1333
encrypt ( key = epoch_key, msg = message_blob)

FIG. 13

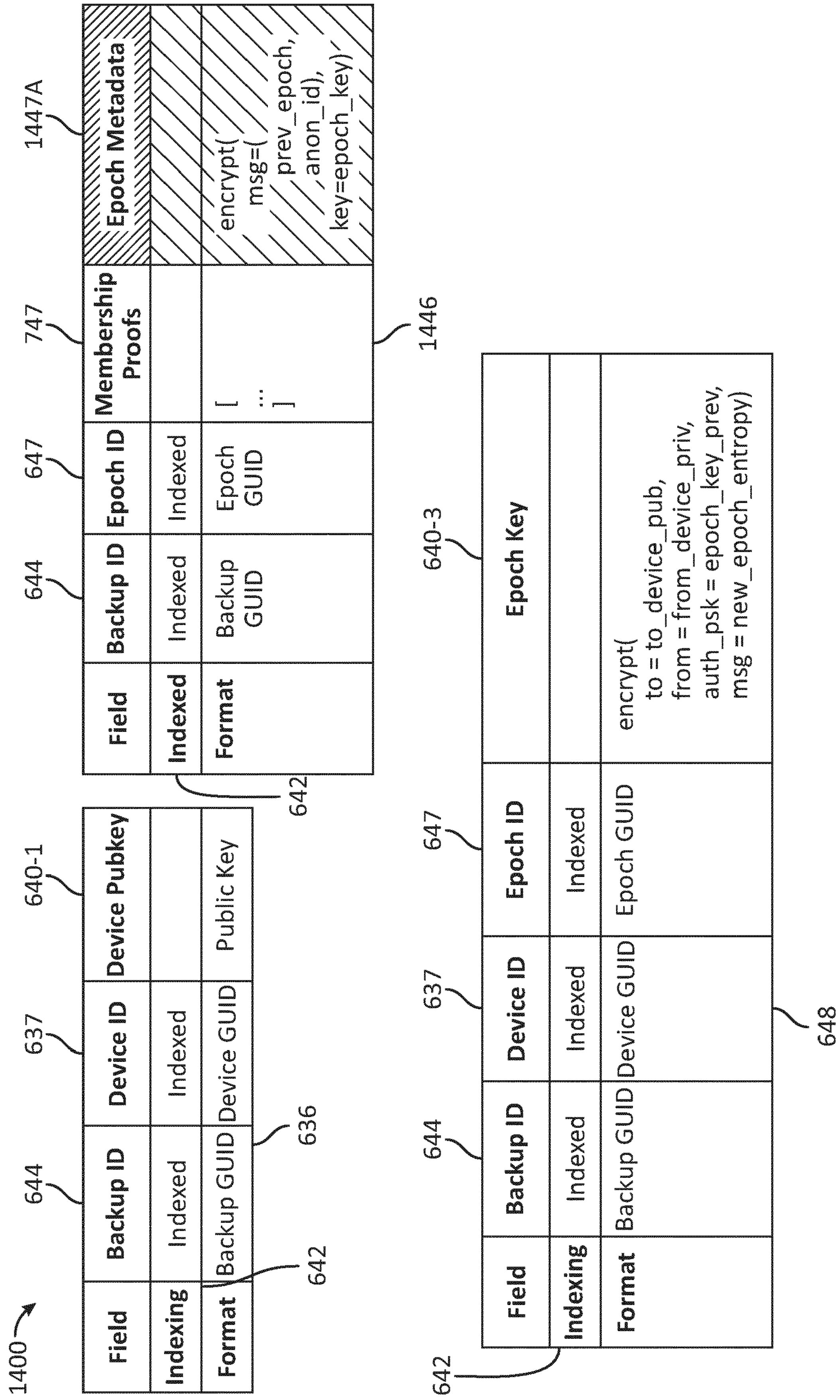
1400
Field
Indexing
Format
644
Backup ID
Indexed
Backup GUID
637
Device ID
Indexed
Device GUID
640-1
Device Pubkey
Public Key
642
636
Field
Indexed
Format
644
Backup ID
Indexed
Backup GUID
647
Epoch ID
Indexed
Epoch GUID
747
Membership Proofs
[
...
]
1446
1447A
Epoch Metadata
encrypt(
msg=(
prev_epoch,
anon_id),
key=epoch_key)
642
Field
Indexing
Format
644
Backup ID
Indexed
Backup GUID
637
Device ID
Indexed
Device GUID
647
Epoch ID
Indexed
Epoch GUID
640-3
Epoch Key
encrypt(
to = to_device_pub,
from = from_device_priv,
auth_psk = epoch_key_prev,
msg = new_epoch_entropy)
648
642

FIG. 14A

1400
442

| | 1344 | 1130 | 1334 |
|---|---|---|---|
| **Field** | **Backup ID** | **Thread ID** | **Last Updated** |
| **Indexing** | Indexed | Indexed | Sortable |
| **Format** | hmac( backup_id, master_key) | hmac( thread_id, master_key) | ope( timestamp, master_key) |

442

| | 1344 | 1130 | 1131 | 1250 | | 1432 |
|---|---|---|---|---|---|---|
| **Field** | **Backup ID** | **Thread ID** | **Message ID** | **Timestamp** | **Epoch ID** | **Message Data** |
| **Indexing** | Indexed | Indexed | Indexed | Sortable | 1447 | 1333 |
| **Format** | hmac( backup_id, master_key) | hmac( thread_id, master_key) | hmac( message_id, master_key) | ope( timestamp, master_key) | epoch_an on_id | encrypt ( key = epoch_key, msg = message_blob) |

FIG. 14B

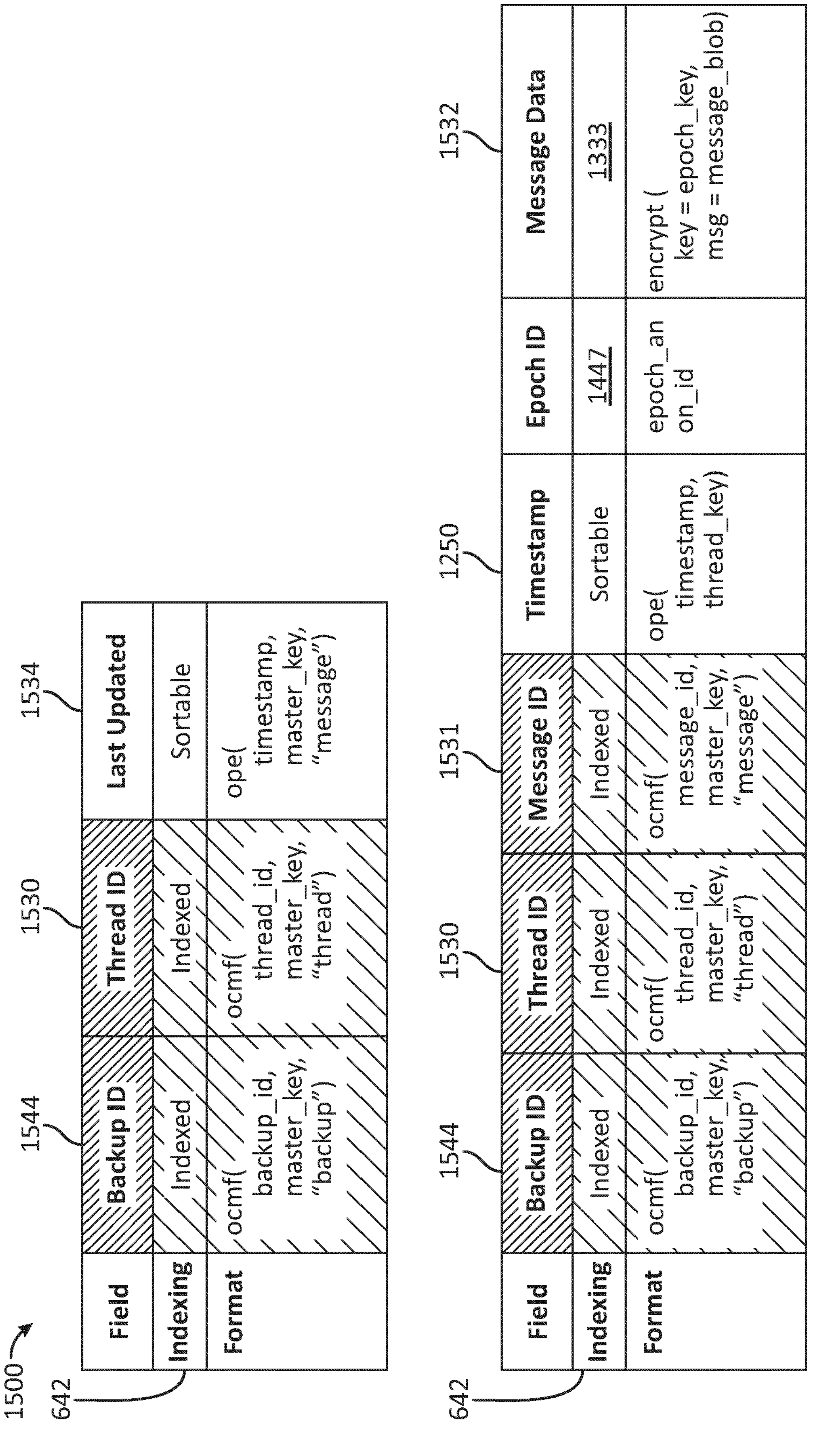
1500
642
1544
1530
1534
Field
Indexing
Format
Backup ID
Indexed
ocmf( backup_id, master_key, "backup")
Thread ID
Indexed
ocmf( thread_id, master_key, "thread")
Last Updated
Sortable
ope( timestamp, master_key, "message")
642
1544
1530
1531
1250
1532
Field
Indexing
Format
Backup ID
Indexed
ocmf( backup_id, master_key, "backup")
Thread ID
Indexed
ocmf( thread_id, master_key, "thread")
Message ID
Indexed
ocmf( message_id, master_key, "message")
Timestamp
Sortable
ope( timestamp, thread_key)
Epoch ID
1447
epoch_an on_id
Message Data
1333
encrypt ( key = epoch_key, msg = message_blob)

FIG. 15

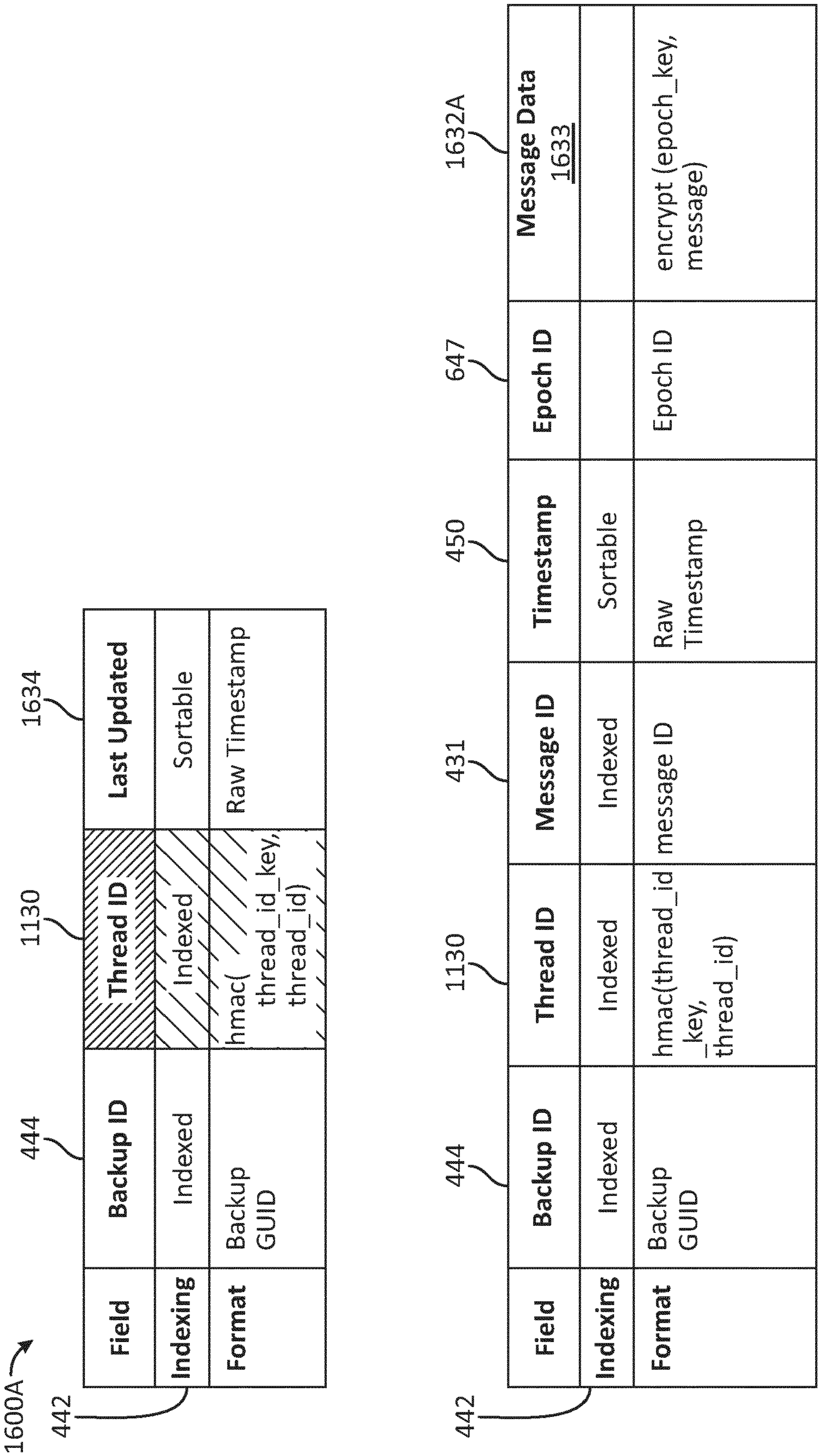
1600A
442
444
1130
1634
Field
Indexing
Format
Backup ID
Indexed
Backup GUID
Thread ID
Indexed
hmac( thread_id_key, thread_id)
Last Updated
Sortable
Raw Timestamp
442
444
1130
431
450
647
1632A
Field
Indexing
Format
Backup ID
Indexed
Backup GUID
Thread ID
Indexed
hmac(thread_id _key, thread_id)
Message ID
Indexed
message ID
Timestamp
Sortable
Raw Timestamp
Epoch ID
Epoch ID
Message Data
1633
encrypt (epoch_key, message)

FIG. 16A

1600B

442

| Field | Backup ID (444) | Thread ID (1530) | Last Updated (1634) |
|---|---|---|---|
| Indexing | Indexed | Indexed | Sortable |
| Format | Backup GUID | ocmf (thread_id) | Raw Timestamp |

442

| Field | Backup ID (444) | Thread ID (1530) | Message ID (431) | Timestamp (450) | Epoch ID (647) | Message Data 1633 (1632B) |
|---|---|---|---|---|---|---|
| Indexing | Indexed | Indexed | Indexed | Sortable | | |
| Format | Backup GUID | ocmf (thread_id) | message ID | Raw Timestamp | Epoch ID | encrypt (epoch_key, message) |

FIG. 16B

1600C

442 444 1530 1531 1632C 450 647 1633

| Field | Backup ID | Thread ID | Message ID | Timestamp | Epoch | Message Data |
|---|---|---|---|---|---|---|
| Indexing | Indexed | Indexed | Indexed | Sortable | | |
| Format | Backup GUID | ocmf (thread_id) | ocmf (message _id) | Raw Timestamp | Epoch ID | encrypt (epoch_key, message) |

FIG. 16C

1600D

442 444 1530 1531 1632D 1650 647 1633

| Field | Backup ID | Thread ID | Message ID | Timestamp | Epoch ID | Message Data |
|---|---|---|---|---|---|---|
| Indexing | Indexed | Indexed | Indexed | Sortable | | |
| Format | Backup GUID | ocmf (thread_id) | ocmf (message _id) | ope (ope_key, timestamp) | Epoch ID | encrypt (epoch_key, message) |

FIG. 16D

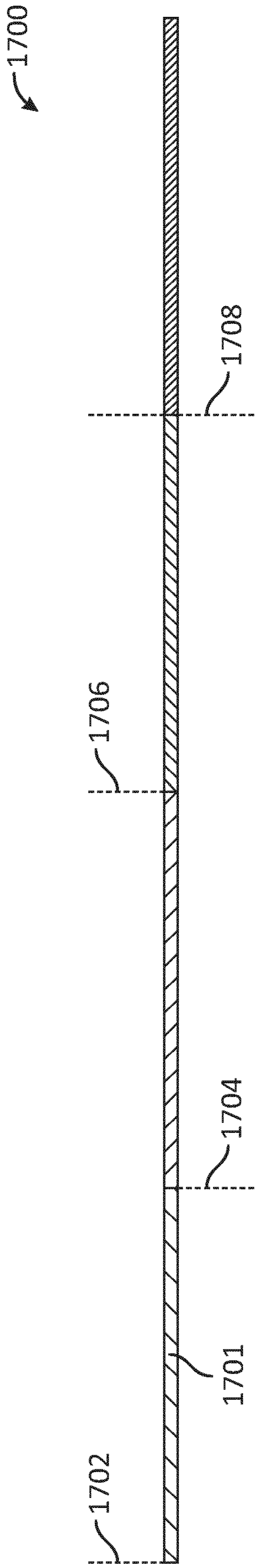


FIG. 17

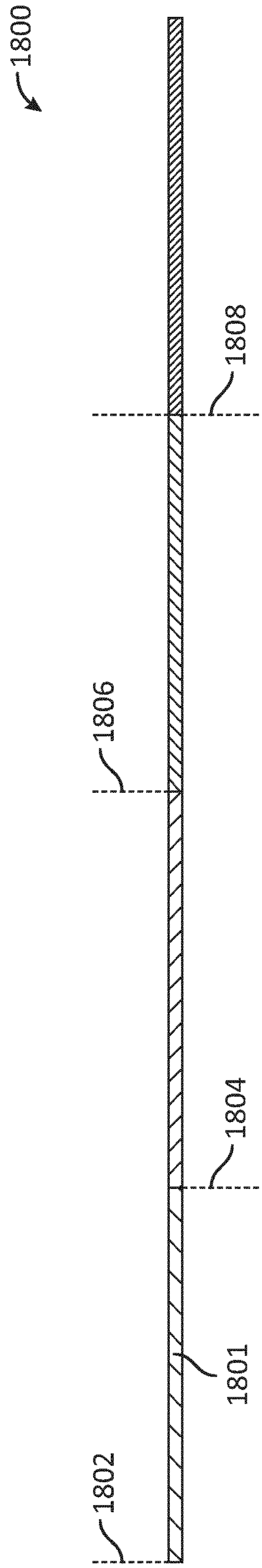


FIG. 18

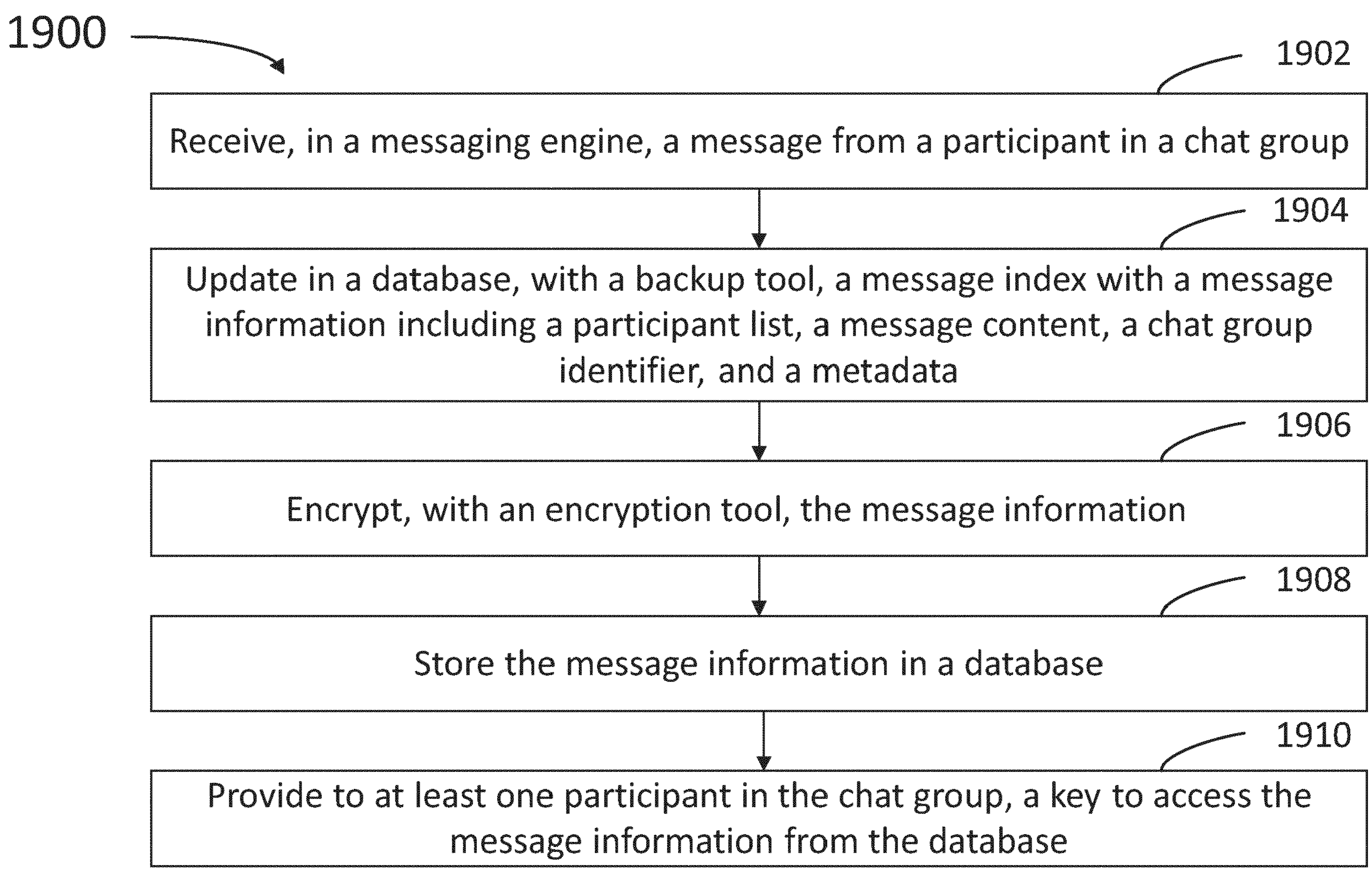
1900
1902
Receive, in a messaging engine, a message from a participant in a chat group
1904
Update in a database, with a backup tool, a message index with a message information including a participant list, a message content, a chat group identifier, and a metadata
1906
Encrypt, with an encryption tool, the message information
1908
Store the message information in a database
1910
Provide to at least one participant in the chat group, a key to access the message information from the database

FIG. 19

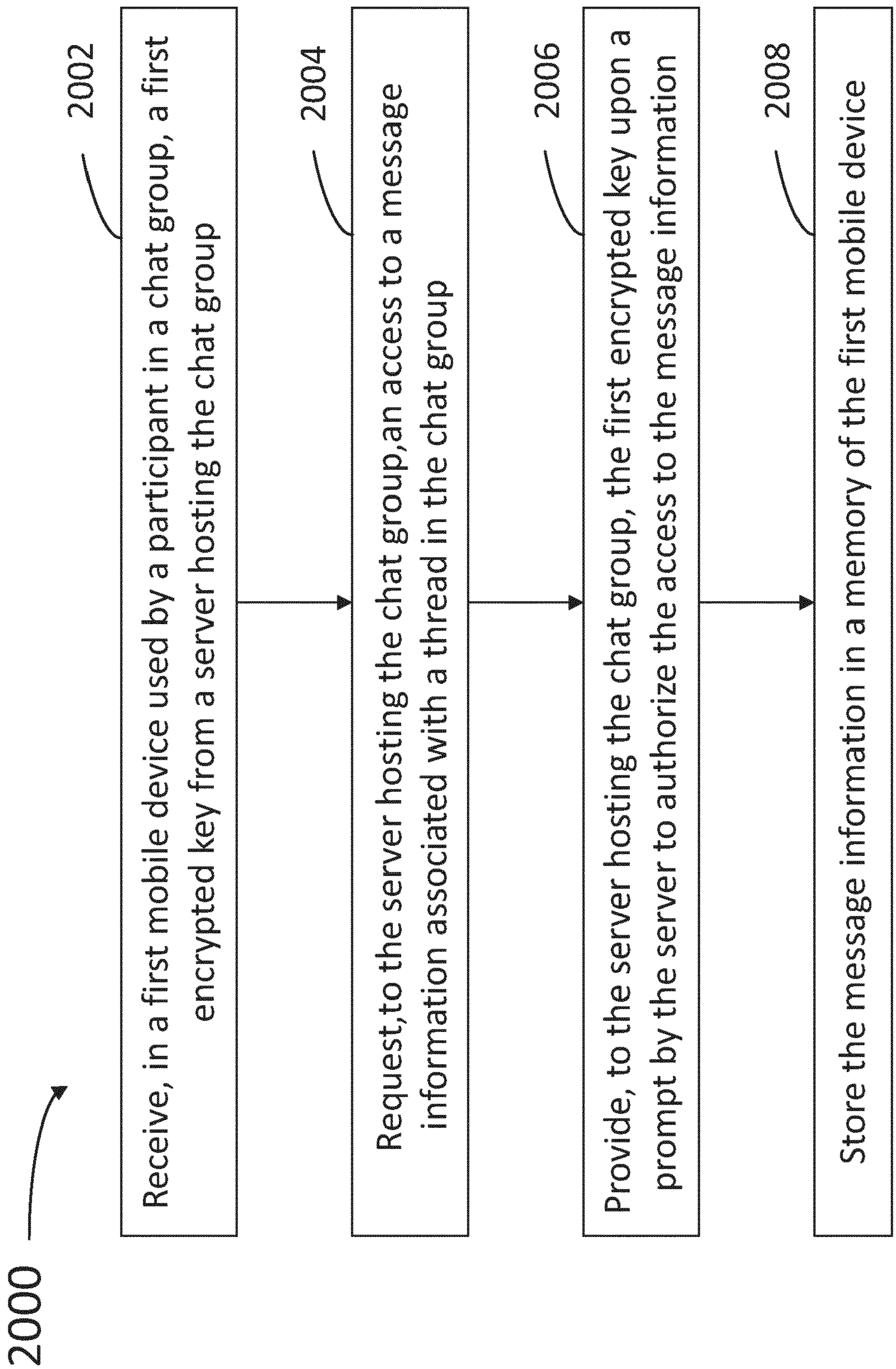
2000
2002
Receive, in a first mobile device used by a participant in a chat group, a first encrypted key from a server hosting the chat group
2004
Request,to the server hosting the chat group,an access to a message information associated with a thread in the chat group
2006
Provide, to the server hosting the chat group, the first encrypted key upon a prompt by the server to authorize the access to the message information
2008
Store the message information in a memory of the first mobile device

FIG. 20

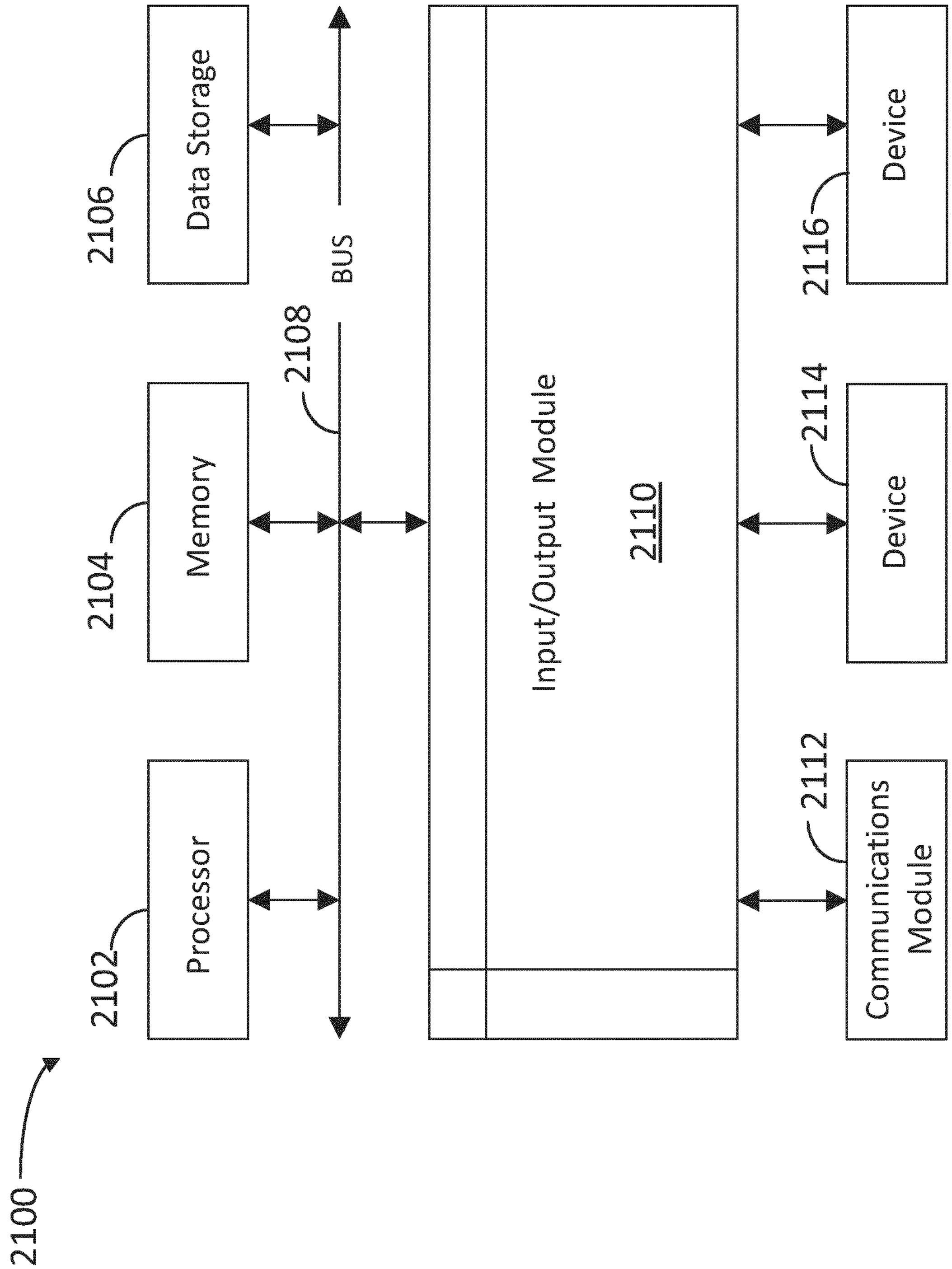
2100
2102
Processor
2104
Memory
2106
Data Storage
2108
BUS
Input/Output Module
2110
2112
Communications Module
2114
Device
2116
Device

FIG. 21

Europäisches Patentamt
European Patent Office
Office européen des brevets

# EUROPEAN SEARCH REPORT

Application Number
EP 22 20 5715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2018/198610 A1 (MULLINS CHRISTOPHER L [US] ET AL) 12 July 2018 (2018-07-12)<br>* paragraph [0021] - paragraph [0033]; figure 1 *<br>* paragraph [0066] *<br>----- | 1,3-5,7, 9,11-13<br>2,6,8, 10,14,15 | INV. H04L9/14 |

| | |
|---|---|
| TECHNICAL FIELDS SEARCHED (IPC) | H04L |

The present search report has been drawn up for all claims

| Place of search | Date of completion of the search | Examiner |
|---|---|---|
| The Hague | 6 March 2023 | Raposo Pires, João |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

5

EPO FORM 1503 03.82 (P04C01)

# ANNEX TO THE EUROPEAN SEARCH REPORT ON EUROPEAN PATENT APPLICATION NO.

EP 22 20 5715

This annex lists the patent family members relating to the patent documents cited in the above-mentioned European search report. The members are as contained in the European Patent Office EDP file on
The European Patent Office is in no way liable for these particulars which are merely given for the purpose of information.

06-03-2023

| Patent document cited in search report | Publication date | Patent family member(s) | Publication date |
|---|---|---|---|
| US 2018198610 A1 | 12-07-2018 | CN 110140325 A | 16-08-2019 |
| | | EP 3566388 A1 | 13-11-2019 |
| | | US 2018198610 A1 | 12-07-2018 |
| | | US 2019273611 A1 | 05-09-2019 |
| | | WO 2018129108 A1 | 12-07-2018 |

EPO FORM P0459

For more details about this annex : see Official Journal of the European Patent Office, No. 12/82